# EUROPÄISCHE PATENTANMELDUNG

(11) **EP 2 019 255 A2**
(43) Veröffentlichungstag der Anmeldung: **28.01.2009**
(21) Anmeldenummer: 08013155.0
(22) Anmeldetag: 22.07.2008
(51) Int. Cl.: F21S 8/04, F21V 5/08, F21V 7/09

(54) **Leuchte zur Ausleuchtung einer Fläche in einem Gebäude**

(30) Priorität: 19.09.2007 DE 102007044963; 26.07.2007 DE 202007010501 U; 26.07.2007 DE 202007010500 U
(71) Anmelder: ERCO GmbH, 58507 Lüdenscheid (DE)
(72) Erfinder: Bremerich, Matthias, Dr., 57368 Lennestadt (DE); Klose, Leonhard, 58513 Lüdenscheid (DE)
(74) Vertreter: Ostriga, Sonnet, Wirths & Roche

(57) **Zusammenfassung**

Beschrieben und dargestellt ist u. a. eine Leuchte (10) zur Ausleuchtung einer Gebäudefläche (15) umfassend einen, eine Lichtaustrittsöffnung (24) aufweisenden, schalenförmigen Grundkörper (11), in dessen Innenraum (31) eine Lichtquelle (12) angeordnet ist, wobei indirekte Lichtanteile (30a, 30b, 30c) ausgehend von der Lichtquelle erst nach Reflektion an Reflektorflächen (21, 22) und Direklichtanteile (29a, 29b, 29c) ausgehend von der Lichtquelle ohne Reflektion an Reflektorflächen durch die Lichtaustrittsöffnung hindurchtreten können, wobei im Bereich der Lichtaustrittsöffnung eine Spreizlinsenplatte (23) angeordnet ist, die für eine Aufspreizung der lichtanteile zur Vergleichmäßigung der Ausleuchtung der Gebäudefläche sorgt, und wobei die Reflektorflächen einen im Querschnitt parabelförmigen Wandabschnitt (22) und einen im Querschnitt elliptischen Wandabschnitt (21) aufweisen.

## Beschreibung

Die Erfindung betrifft eine Leuchte zur Ausleuchtung einer Gebäudefläche.

Insbesondere betrifft die Erfindung eine Leuchte zur Ausleuchtung einer Gebäudefläche, die unter Zuhilfenahme einer Spreizlinsenplatte eine Gebäudefläche gleichmäßig ausleuchtet.

Die Erfindung geht aus von einer Leuchte, wie sie als so genannter Linsenwandfluter von der Anmelderin offenkundig vorbenutzt worden ist. Eine solche Leuchte ist beispielsweise auf den Seiten 342, 343 und 761 des Kataloges "ERCO-Programm, Lichtsteuerung, Innenraum, Außenraum, Ausgabe 2006/2007", erwähnt. Die vorbekannte Leuchte weist einen um seine Längsmittelachse im Wesentlichen rotationssymmetrisch ausgebildeten Reflektor mit parabelförmigern Querschnitt auf.

Ausgehend von der durch seine offenkundige Vorbenutzung bekannt gewordenen Leuchte des Standes der Technik der Anmelderin besteht die Aufgabe der Erfindung darin, die bekannte Leuchte derartig weiterzuentwickeln, dass eine verbesserte Ausleuchtung einer Gebäudefläche möglich wird.

Die Erfindung löst diese Aufgabe mit den Merkmalen des Anspruches 1.

Die erfindungsgemäße Leuchte zur Ausleuchtung einer Gebäudefläche umfasst erfindungsgemäß einen, eine Lichtaustrittsöffnung aufweisenden schalenförmigen Grundkörper, in dessen Innenraum eine Lichtquelle angeordnet ist, wobei indirekte Lichtanteile ausgehend von der Lichtquelle erst nach Reflektion an Reflektorflächen und Direktlichtanteile ausgehend von der Lichtquelle ohne Reflektion an Reflektorflächen durch die Lichtaustrittsöffnung hindurchtreten können, wobei im Bereich der Lichtaustrittsöffnung eine Spreizlinsenplatte angeordnet ist, die für eine Aufspreizung der Lichtanteile zur Vergleichmäßigung der Ausleuchtung der Gebäudefläche sorgt, und wobei die Reflektorflächen einen im Querschnitt parabelförmigen Wandabschnitt und einen im Querschnitt elliptischen Wandabschnitt aufweisen.

Als Gebäudefläche im Sinne der Erfindung wird jede von einer Gebäudewand, beispielsweise einer Gebäudedecke, einer Bodenwand oder einer Gebäudeseitenwand, bereitgestellte Fläche, und eine Gebäudeteilfläche, verstanden. Als Leuchte zur Ausleuchtung einer Gebäudefläche wird im Sinne der vorliegenden Patentanmeldung jede Innen- oder Außenraumleuchte verstanden. Die erfindungsgemäße Leuchte ist vorzugsweise ein Wandfluter. Mit der erfindungsgemäßen Leuchte können aber auch Objekte, wie Kunstwerke oder Waren, ausgeleuchtet werden.

Die erfindungsgemäße Leuchte umfasst einen Grundkörper, der schalenförmig ausgebildet ist. Als schalenförmiger Grundkörper wird jeder Grundkörper einer im Wesentlichen gewölbten, zu einer Lichtaustrittsöffnung hin offenen und im Übrigen im Wesentlichen geschlossenen Grundform angesehen. Es kann sich dabei um einen um eine Rotationsachse im Wesentlichen symmetrisch ausgebildeten Grundkörper handeln. Bei einer bevorzugten Ausgestaltung der Erfindung ist der Grundkörper axial langgestreckt, im Wesentlichen zylindrisch, insbesondere wannenförmig, ausgebildet.

In dem Innenraum des Grundkörpers ist eine Lichtquelle angeordnet. Von der Lichtquelle wird Licht emittiert, welches durch eine Lichtaustrittsöffnung des Grundkörpers aus dem Grundkörper austritt. Die Lichtaustrittsöffnung des Grundkörpers entspricht beispielsweise der Lichtaustrittsöffnung der Leuchte oder ist der Letzteren benachbart. Sie kann insbesondere unmittelbar benachbart der Lichtaustrittsöffnung der Leuchte angeordnet sein.

Die Lichtquelle ist derartig angeordnet, dass durch die Lichtaustrittsöffnung des Grundkörpers sowohl indirekte Lichtanteile als auch Direkt-Lichtanteile hindurchtreten. Direkt-Lichtanteile im Sinne der vorliegenden Patentanmeldung sind solche Lichtanteile, die ausgehend von der Lichtquelle unmittelbar durch die Lichtaustrittsöffnung des Grundkörpers hindurchtreten können, ohne dass sie zuvor an Reflektorflächen reflektiert wurden. Als indirekte Lichtanteile der Lichtquelle werden diejenigen Lichtanteile bezeichnet, die zumindest einmalig an Reflektorflächen reflektiert wurden, bevor sie durch die Lichtaustrittsöffnung hindurchtreten können.

Zwischen der Lichtquelle und der Lichtaustrittsöffnung ist eine Spreizlinsenplatte angeordnet. Als Spreizlinsenplatte wird jeder im Wesentlichen flächig, vorzugsweise plan, unter Umständen aber auch gewölbt, ausgebildete Körper verstanden, der für eine Aufspreizung der Lichtanteile sorgen kann. Die Spreizlinsenplatte spreizt sowohl die direkten Lichtanteile als auch die indirekten Lichtanteile auf. Die Aufspreizung dient der Vergleichmäßigung der Ausleuchtung der Gebäudefläche. Es kann insoweit eine homogene Beleuchtungsstärkeverteilung auf der auszuleuchtenden Gebäudefläche erzielt werden.

Die Spreizlinsenplatte ist beispielsweise von einer Glasscheibe gebildet, die auf einer der beiden Seiten glatt ausgebildet ist und auf der anderen Seite zylindrische Linsen aufweist. Trifft auf eine zylindrische Linse ein Lichtstrahl, so wird der Strahl in Abhängigkeit von der gewählten Brennweite der Zylinderlinse zu einer langen Linie aufgespreizt. Diese Linie steht quer zu der Axialrichtung der Zylinderlinsen.

Gleichermaßen kann die von der Lichtquelle emittierte und in Form von Direkt-Lichtanteilen oder indirekten Lichtanteilen auf die Spreizlinsenplatte auftreffende Gesamtheit aller Lichtanteile in der Breite deutlich aufgespreizt werden.

Die Spreizlinsenplatte ist hinsichtlich ihrer Dimension derart bemessen, dass sie den gesamten Öffnungsquerschnitt der Lichtaustrittsöffnung abdeckt. Die Spreizlinsenplatte kann in Lichtabstrahlrichtung vor oder hinter der Lichtaustrittsöffnung des Grundkörpers angeordnet sein oder in der Lichtaustrittsöffnung des Grundkörpers angeordnet sein.

Bei der erfindungsgemäßen Leuchte wird die Reflektorfläche zumindest von zwei unterschiedlich gekrümmten Wandabschnitten gebildet. Ein erster Wandabschnitt ist im Querschnitt parabelförmig ausgebildet und ein zweiter Wandabschnitt ist im Querschnitt elliptisch ausgebildet. Diese Ausgestaltung der Reflektorflächen ermöglicht, dass die Lichtquelle unmittelbar im Brennpunkt oder nahe des Brennpunktes sowohl des parabelförmigen Wandabschnittes als auch des im Querschnitt elliptischen Wandabschnittes angeordnet sein kann. Dies ermöglicht die Erzielung einer Beleuchtungsstärkeverteilung auf der auszuleuchtenden Wand, wobei die Parabelform und die Ellipsenform des entsprechenden Wandabschnitt-Querschnittes beliebig wählbar ist.

Beispielsweise kann mit der erfindungsgemäßen Leuchte eine besonders gleichmäßige Beleuchtungsstärkeverteilung über die gesamte vertikale Höhe oder nur entlang eines Teils der Höhe der auszuleuchtenden Gebäudewand erzielt werden. Alternativ kann bei einer entsprechenden Orientierung der Gebäudeleuchte relativ zu der auszuleuchtenden Gebäudefläche auch eine besonders homogene Ausleuchtung in einer Richtung horizontal zu einer Bodenfläche erzielt werden. Schließlich kann eine gewünschte Beleuchtungsstärkverteilung auch in einer beliebigen Raumrichtung generiert werden.

Die erfindungsgemäße Anordnung und Kombination im Querschnitt parabelförmiger und im Querschnitt elliptischer Wandabschnitte miteinander ermöglicht insbesondere auch eine asymmetrische Beleuchtungsstärkeverteilung. Insbesondere bei einer verhältnismäßig wandnahen Anordnung der Gebäudeleuchte kann die Ausleuchtung leuchtenferner Bereiche der auszuleuchtenden Gebäudefläche erzielt werden. Damit können im Ergebnis Beleuchtungsstärkeverteilungen und insbesondere gleichmäßige, homogene Ausleuchtungen vor Gebäudeflächen erzielt werden, die mit den Leuchten des Standes der Technik nicht erzielbar waren.

Gemäß einer vorteilhaften Ausgestaltung der Erfindung ist der Grundkörper wannenförmig ausgebildet. Dies ermöglicht die Verwendung von Langfeld-Leuchtmitteln, wobei auch mehrere Leuchtmittel axial hintereinander in einem gemeinsamen Grundkörper untergebracht sein können. Auch können mehrere Grundkörper axial nebeneinander angeordnet werden oder mehrere Leuchten axial nebeneinander angeordnet werden. Auf diese Weise kann eine besonders gleichmäßige Ausleuchtung einer Gebäudefläche über eine nahezu beliebige axiale Erstreckung erzielt werden.

Auch bei Anordnung lediglich einer einzigen Leuchte mit einem wannenförmigen Grundkörper kann eine in Axialrichtung langgestreckte Beleuchtungsstärkeverteilung auf der auszuleuchtenden Gebäudefläche erzielt werden. Schließlich bietet die wannenförmige Ausgestaltung eines Grundkörpers die Möglichkeit einer vereinfachten Konstruktion.

Gemäß einer weiteren vorteilhaften Ausgestaltung der Erfindung ist die Lichtquelle axial langgestreckt ausgebildet. Dies ermöglicht den Rückgriff auf herkömmliche, lichtstarke Leuchtmittel des Standes der Technik.

Gemäß einer weiteren vorteilhaften Ausgestaltung der Erfindung sorgt die Spreizlinsenplatte für eine Aufspreizung des Lichtes in Axialrichtung. Dies ermöglicht in Kombination mit einem wannenförmig ausgebildeten Grundkörper eine besonders gleichmäßige Ausleuchtung der Gebäudefläche über einen in Axialrichtung langgestreckten Gebäudeflächenbereich.

Gemäß einer weiteren vorteilhaften Ausgestaltung der Erfindung sind der Grundkörper und/oder die Wandabschnitte zylindrisch ausgebildet. Eine zylindrische Ausbildung bedeutet im Sinne der vorliegenden Patentanmeldung, dass der Grundkörper und/oder die Wandabschnitte entlang der Axialerstreckung des Grundkörpers einen konstanten Querschnitt aufweisen. Dies ermöglicht eine vereinfachte Bauweise, da insbesondere auf langgestreckte Profile als Bauteile für die Konstruktion der Leuchte zugegriffen werden kann.

Angemerkt sei in diesem Zusammenhang, dass die Reflektorflächen unmittelbar von Wandungsbereichen des Grundkörpers bereitgestellt werden können. Die Reflektorflächen können allerdings auch innerhalb des Grundkörpers angeordnet sein. Bei der letztgenannten Variante kann der Grundkörper auch unmittelbar von einem Gehäuse der Leuchte gebildet sein.

Gemäß einer weiteren vorteilhaften Ausgestaltung der Erfindung weist die Spreizlinsenplatte eine Vielzahl von quer zur Axialerstreckung verlaufenden Rippen zur Bildung von Zylinderlinsen auf. Die Zylinderlinsen sind bei dieser Ausgestaltung der Erfindung vorzugsweise senkrecht zur Axialerstreckung des Grundkörpers angeordnet. Während die Wandabschnitte, insbesondere der parabolförmige Wandabschnitt und der elliptische Wandabschnitt, entlang der Axialrichtung verlaufen und insoweit für eine gewünschte Beleuchtungsstärkeverteilung, insbesondere eine besonders homogene Ausleuchtung der Gebäudefläche, in einer Richtung quer zur Axialrichtung sorgen, kann durch Anordnung der Zylinderlinsen entlang einer Richtung quer zur Axialerstreckung eine Aufspreizung der Beleuchtungsstärkeverteilung in Axialrichtung erfolgen. Dies ermöglicht eine gleichmäßige Ausleuchtung der Gebäudefläche über einen sehr großen Flächenbereich.

Gemäß einer weiteren vorteilhaften Ausgestaltung der Erfindung ist als Lichtquelle eine Halogen-Metalldampflampe, insbesondere eine HIT-Lampe oder eine Halogen-Niedervolt-Glühlampe, vorgesehen. Die Verwendung derartig lichtstarker Lichtquellen ermöglicht die Erzielung besonders hoher Beleuchtungsstärken auf der auszuleuchtenden Gebäudefläche. Damit können mit einer einzigen Leuchte auch recht große, unter Umständen auch recht weit von der Leuchte entfernt angeordnete Gebäudeflächenbereiche zufriedenstellend ausgeleuchtet werden.

Vorzugsweise ist die Lichtquelle eine Langfeld-Lichtquelle, die in einem 360°-Umfangswinkelbereich um ihre Längsmittelachse herum abstrahlt.

Gemäß einer weiteren vorteilhaften Ausgestaltung der Erfindung bestehen die Wandabschnitte aus Metall, insbesondere aus Aluminium und sind insbesondere hochreflektierend ausgebildet. Dies ermöglicht die Verwendung sehr viel Wärme entwickelnder Leuchtmittel, wie beispielsweise Halogen-Metalldampflampen oder Halogen-Niedervolt-Glühlampen. Außerdem kann die Konstruktion einer erfindungsgemäßen Leuchte auf diese Weise vereinfacht werden.

Gemäß einer weiteren vorteilhaften Ausgestaltung der Erfindung ist die Leuchte als Wandfluter ausgebildet. Dies ermöglicht die Anordnung einer erfindungsgemäßen Leuchte verhältnismäßig nahe der auszuleuchtenden Gebäudewand und eine homogene Ausleuchtung des gewünschten Bereiches der Gebäudewand.

Gemäß einer weiteren vorteilhaften Ausgestaltung der Erfindung ist die Leuchte als Bodeneinbauleuchte ausgebildet. Die erfindungsgemäße Leuchte kann unter Verwendung der besonderen parabelförmigen und ellipsenförmigen Wandabschnitte dabei insbesondere auch leuchtenferne und leuchtennahe Gebäudeflächenbereiche homogen ausleuchten.

Gemäß einer weiteren vorteilhaften Ausgestaltung der Erfindung ist die Lichtquelle im Brennpunkt oder nahe des Brennpunktes des elliptischen Wandabschnittes und in dem Brennpunkt oder nahe des Brennpunktes des parabelförmigen Wandabschnittes angeordnet. Dies ermöglicht die Vorherbestimmung der Beleuchtungsstärkeverteilung auf der auszuleuchtenden Gebäudefläche in einer verhältnismäßig einfachen Weise, wobei auf herkömmliche, bekannte Prinzipien der Lichttechnik zurückgegriffen werden kann. So kann insbesondere berücksichtig werden, dass die im Brennpunkt des elliptischen Wandabschnittes angeordnete Lichtquelle indirekte Lichtanteile emittiert, wobei diese indirekten Lichtanteile in einem zweiten Brennpunkt gebündelt sind. Vorzugsweise ist die Lichtquelle unter geometrischer Anordnung des elliptischen Wandabschnittes und einer Lichtaustrittsöffnung der Leuchte, gegebenenfalls auch unter Verwendung einer Glasabschlussplatte, derartig konzipiert, dass der zweite Brennpunkt außerhalb des Grundkörpers, das heißt in Lichtabstrahlrichtung hinter der Spreizlinsenplatte und/oder im Bereich der Lichtaustrittsöffnung der Leuchte, vorzugsweise im Bereich eines Abschlussglases, liegt.

Befindet sich die Lichtquelle im Brennpunkt oder nahe des Brennpunktes des parabelförmigen Wandabschnittes, verlassen die von der Lichtquelle ausgesandten, indirekten Lichtanteile, die an dem parabelförmigen Wandabschnitt reflektiert worden sind, den Grundkörper entlang einer parallelen Hauptabstrahlrichtung. Der parabelförmige Wandabschnitt wird dabei, bezogen auf die Lichtquelle, derartig angeordnet, dass vorzugsweise ein fern der Leuchte angeordneter Bereich der auszuleuchtenden Gebäudefläche mit diesen indirekten Lichtanteilen ausgeleuchtet wird. Der im Querschnitt ellipsenförmige Wandabschnitt wird im Übrigen so angeordnet, dass die von diesem Wandabschnitt reflektierten indirekten Lichtanteile vorzugsweise einen nahe der Leuchte angeordneten Bereich der auszuleuchtenden Gebäudefläche ausleuchten.

Gemäß einer weiteren vorteilhaften Ausgestaltung der Erfindung leuchtet die Leuchte die Gebäudefläche gleichmäßig aus. Hierdurch kann in besonders vorteilhafter Weise der gewünschte Beleuchtungseffekt erzielt werden.

Gemäß einer weiteren vorteilhaften Ausgestaltung der Erfindung erstreckt sich der elliptische Wandbereich entlang eines Umfangswinkelbereiches zwischen 90 und 270° um die Lichtquelle herum. Vorzugsweise erstreckt sich der elliptische Wandabschnitt entlang eines Umfangswinkelbereiches von etwa 205° um die Lichtquelle herum. Damit wird von dem elliptischen Wandabschnitt ein größerer Umfangswinkelbereich abgedeckt, als der Umfangswinkel, entlang dem sich der parabelförmige Wandabschnitt erstreckt.

Die Lichtquelle kann im Verhältnis zur Grundform des Reflektors mit den beiden Wandabschnitten und der Lichtaustrittsöffnung des Grundkörpers derartig angeordnet sein, dass sich beispielsweise ein Öffnungswinkel von etwa 70° bezogen auf den Brennpunkt oder den Ort der Lichtquelle ergibt, so dass der elliptische Wandabschnitt und der parabelförmige Wandabschnitt gemeinsam etwa einen Umfangswinkelbereich von 270° abdecken.

Gemäß einer weiteren vorteilhaften Ausgestaltung der Erfindung erstreckt sich der parabelförmige Wandabschnitt etwa entlang eines Umfangswinkelbereiches zwischen 20 und 100° um die Lichtquelle herum, vorzugsweise entlang eines Umfangswinkelbereiches zwischen 30 und 90°, weiter vorteilhaft entlang eines Umfangswinkelbereiches von etwa 70°, weiter vorteilhaft von etwa 45°.

Gemäß einer weiteren vorteilhaften Ausgestaltung der Erfindung ist die Spreizlinsenplatte im Wesentlichen quer zu einer Haupanstrahlrichtung der Leuchte ausgerichtet. Insbesondere ist die Spreizlinsenplatte geneigt zu der auszuleuchtenden Wand ausgerichtet.

Weiter vorteilhaft umfasst die Leuchte, insbesondere im Falle einer Ausbildung als Bodeneinbauleuchte, ein Abschlussglas. Die Spreizlinsenplatte kann dann geneigt zu dem Abschlussglas angeordnet sein, insbesondere geneigt unter einem Winkel zwischen 20 und 60°, weiter vorzugsweise geneigt unter einem Winkel von etwa 45°.

Der elliptische Wandabschnitt und der parabelförmige Wandabschnitt können vorteilhaft mit einem zum Beispiel eben oder plan ausgebildeten Zwischenelement verbunden sein, zum Beispiel, um die beiden Wandabschnitte unmittelbar aneinander zu befestigen und um unterschiedliche Radienabstände, bezogen auf die Lichtquelle, auszugleichen.

Weiter vorteilhaft ist die Leuchte dadurch gekennzeichnet, dass in Lichtabstrahlrichtung der Lichtquelle vor dem parabelförmigen Wandabschnitt ein Abblendelement angeordnet ist.

Die Erfindung betrifft des Weiteren eine Leuchte zur Ausleuchtung von Gebäudefläche gemäß Anspruch 10.

Die Erfindung geht wiederum aus von der eingangs beschriebenen, infolge einer offenkundigen Vorbenutzung durch die Anmelderin bekannt gewordenen Leuchte.

Auch dieser Erfindung liegt die Aufgabe zugrunde, die durch offenkundige Vorbenutzung bekannt gewordene Leuchte des Standes der Technik der Anmelderin derartig weiterzuentwickeln, dass eine verbesserte Ausleuchtung einer Gebäudefläche möglich wird.

Die Erfindung löst diese Aufgabe mit den Merkmalen des Anspruches 10.

Die erfindungsgemäße Leuchte dient zur Ausleuchtung von Gebäudeflächen, insbesondere zur besonders gleichmäßigen und homogenen Ausleuchtung großer Bereiche von Gebäudeflächen. Als Gebäudefläche im Sinne der Formulierung des Anspruches 20 kann auf die oben angeführte Formulierung zurückgegriffen werden.

Die Leuchte umfasst ein im Wesentlichen schalenartig ausgebildetes Reflektorelement. Es handelt sich dabei um ein gewölbtes, im Wesentlichen becherartig ausgebildetes, hohles Reflektorelement. Dieses weist auf seiner Innenseite eine Reflektorfläche auf. Vorzugsweise besteht das Reflektorelement aus Metall, weiter vorzugsweise aus gedrücktem Aluminium.

Das Reflektorelement erstreckt sich entlang einer Längsmittelachse von einem Scheitelbereich zu einer Lichtaustrittsöffnung hin. Entlang der Längsmittelachse erweitert es sich, das heißt der Durchmesser des Reflektorelementes nimmt mit größerem Abstand vom Scheitelbereich zu.

Vorzugsweise ist das Reflektorelement im Querschnitt im Wesentlichen parabelförmig ausgebildet. Weiter vorzugsweise ist das Reflektorelement entlang einer Schnittebene geschnitten, die geneigt zur Längsmittelachse des Reflektorelementes angeordnet ist.

Der Scheitelbereich ist derjenige Bereich des Reflektorelementes, der am weitesten von der Lichtaustrittsöffnung beabstandet ist. Vorzugsweise ist im Scheitelbereich des Reflektorelementes ein Durchlass oder eine Eintrittsöffnung für ein Leuchtmittel vorgesehen. Weiter vorzugsweise ist das Reflektorelement im Bereich seines Scheitels und/oder im Bereich seines freien Randbereiches an einem Gehäuse der Leuchte befestigt.

In dem Innenraum des Reflektorelementes ist wenigstens eine Lampe anordenbar. Als Lampe kommen vorzugsweise herkömmliche Leuchtmittel, insbesondere Halogen-Metalldampf-Lampen, wie HIT-Lampen, in Betracht. Vorzugsweise ist die Lichtquelle eine punktförmige Lichtquelle.

Die Lichtaustrittsöffnung des Reflektorelementes ist diejenige Öffnung, durch welche das Licht hindurch treten muss, um auf die auszuleuchtende Gebäudefläche zu gelangen. Während bei einem vollständig rotationssymmetrischen Reflektorelement die Lichtaustrittsöffnung eine kreisrunde Kontur aufweist, ist die Lichtaustrittsöffnung des Reflektorelementes bei der erfindungsgemäßen Leuchte in Folge einer schräg zur Längsmittelachse des Reflektorelementes geneigten Schnittebene von einer ovalen Umrandung umgeben.

Durch die Lichtaustrittsöffnung können direkte und indirekte Lichtanteile hindurch treten. Als indirekte Lichtanteile wird die Gesamtheit aller derjenigen Lichtstrahlen bezeichnet, die ausgehend von der Lichtquelle erst nach Reflektion an der Innenseite des Reflektors durch die Lichtaustrittsöffnung hindurch treten. Als direkte Lichtanteile werden sämtliche Lichtstrahlen bezeichnet, die ohne Reflektion an der Innenseite des Reflektors durch die Lichtaustrittsöffnung hindurch treten können. Die auszuleuchtende Gebäudefläche wird also vorzugsweise durch direkte und indirekte Lichtanteile gemeinsam beleuchtet.

Bei Verwendung einer Lampe, das heißt eines Leuchtmittels, welches in Hauptabstrahlrichtung der Lampe, das heißt in einer Richtung entlang der Längsmittelachse des Reflektorelementes, ein lichtundurchlässiges Kappenelement aufweist, treten unter Umständen keine Direktlichtanteile durch die Lichtaustrittsöffnung hindurch. Bei Verwendung von Leuchtmitteln, die auch in Richtung der Längsmittelachse des Reflektorelementes abstrahlen können, treffen vorteilhaft auch direkte Lichtanteile auf die Spreizlinsenplatte auf.

Im Bereich der Lichtaustrittsöffnung, vorzugsweise unmittelbar in der Lichtaustrittsöffnung des Reflektorelementes, ist eine Spreizlinsenplatte angeordnet. Als Spreizlinsenplatte wird in Übereinstimmung mit den obigen, zu Anspruch 1 und den darauf rückbezogenen Ansprüchen durchgeführten Erläuterungen ein flächiges, insbesondere eben ausgebildetes Element bezeichnet, welches lichtdurchlässig ausgebildet ist und eine Vielzahl von vorzugsweise zylindrischen Linsen aufweist. Die Spreizlinsenplatte dient dazu, die Lichtanteile entlang einer einzigen Vorzugsrichtung aufzuspreizen. Die Aufspreizung der Lichtanteile sorgt für eine Vergleichmäßigung der Ausleuchtung der Gebäudefläche. Im einfachsten Fall ist auf wenigstens einer Seite der zum Beispiel aus Glas bestehenden Spreizlinsenplatte eine Vielzahl von rippenartig ausgebildeten langgestreckten Zylinderlinsen angeordnet.

Als Spreizlinsenplatte im Sinne der vorliegenden Patentanmeldung können klare oder leicht mattierte Gläser, zum Beispiel Flachgläser, Verwendung finden. Die Zylinderlinsen können auf einer oder auf beiden Seiten der Spreizlinsenplatte angeordnet sei. Zylinderlinsen können durch konvexe oder im Querschnitt konkave Wölbungen gebildet sein. Vorzugsweise sind die Zylinderlinsen durchgehend ausgebildet und erstrecken sich von einem Randbereich der Linsenplatte zum gegenüberliegenden Randbereich der Linsenplatte. Bei einer alternativen Ausgestaltung der Spreizlinsenplatte sind die Zylinderlinsen von zahlreichen Mikrolinsen gebildet, die gleicherweise zu einer Aufspreizung der Lichtanteile sorgen.

An der Innenseite des Reflektorelementes ist eine Vielzahl von Segmenten mit einer jeweils zum Innenraum des Reflektorelementes hin gewölbten Oberfläche angeordnet. Durch Anordnung zahlreicher, einzelner Segmente besteht die Möglichkeit, die Lichtstrahlcharakteristik des Reflektorelementes beliebig zu gestalten und auf diese Weise eine gewünschte Abstrahlcharakteristik zu erzielen. Insbesondere besteht bei Verwendung zylindrisch ausgebildeter Segmente die Möglichkeit, die Lichtverteilung entlang einer ersten Richtung in der gewünschten Weise anzupassen. Durch Verwendung einer Spreizlinsenplatte kann zusätzlich eine Aufspreizung und Vergleichmäßigung entlang einer zweiten, zu der ersten Richtung senkrechten Richtung vorgenommen werden.

Die Erfindung erkennt, dass zur gleichmäßigen Ausleuchtung einer Gebäudefläche eine Konstruktion eines Reflektorelementes zur Erzielung einer bestimmten Lichtcharakteristik entlang einer ersten Richtung unabhängig von der nachfolgenden Konstruktion und Positionierung einer Spreizlinsenplatte erfolgen kann. Durch Optimierung der Innenfläche des Reflektorelementes, also der aktiven Reflektionsfläche, kann die Lichtstrahlcharakteristik entlang der ersten Richtung in der gewünschten Weise beeinflusst werden.

Beispielweise im Falle einer Ausbildung der erfindungsgemäßen Leuchte nach Anspruch 10 als Deckeneinbauleuchte oder als gebäudedeckenseitig angeordneter Strahler, kann es gewünscht sein, eine vertikale Wand gleichmäßig auszuleuchten. Um besonders tiefe, das heißt bodenflächennahe Bereiche der vertikalen Wand gleichmäßig mit auszuleuchten oder um diese zu betonen, kann eine andere Abstrahlcharakteristik der Leuchte gewünscht sein, als für den Fall, dass besonders hohe, das heißt gebäudedeckennahe Bereiche der vertikalen Gebäudefläche, ausgeleuchtet werden sollen. Beide Anwendungsbereiche können durch eine entsprechende Gestaltung der Segmente erreicht werden. Auch ist die Ausleuchtung sehr hoher, vertikaler Gebäudewände oder leuchtennaher Flächenbereiche mit der erfindungsgemäßen Leuchte möglich.

Die Innenfläche des Reflektorelementes kann infolge der Anordnung zahlreicher Segmente beliebig gestaltet werden. Beispielsweise kann ein erster Umfangswinkelbereich oder Teilbereich des Reflektorelementes die Lichtabstrahlcharakteristik eines im Querschnitt parabolförmigen Reflektors nachahmen und ein anderer Umfangswinkelbereich oder ein anderer Teilbereich der Innenseite des Reflektorelementes die Lichtabstrahlcharakteristik eines anderen Reflektors, zum Beispiel eines im Querschnitt elliptischen Reflektors, nachahmen. Auf diese Weise kann die Gebäudefläche in einer optimierten, besonders homogenen Weise ausgeleuchtet werden.

Die erfindungsgemäße Kombination einer Spreizlinsenplatte mit einem Segmente aufweisenden Reflektor ermöglicht darüber hinaus die Erzielung besonders geringer Leuchtdichten auf der Außenseite der Spreizlinsenplatte oder im Bereich der Lichtaustrittsöffnung der Leuchte. Dies reduziert die ungewünschte Blendungswirkung bei einem Betrachter.

Gemäß einer vorteilhaften Ausgestaltung der Erfindung besteht das Reflektorelement aus Metall. Dies erlaubt die Verwendung hohe Wärmeenergie abstrahlender Leuchtmittel und eine einfache Konstruktion.

Gemäß einer weiteren vorteilhaften Ausgestaltung der Erfindung besteht das Reflektorelement aus gedrücktem Aluminium. Dies ermöglicht den Rückgriff auf herkömmliche Fertigungsverfahren und Materialien.

Gemäß einer weiteren vorteilhaften Ausgestaltung der Erfindung umfasst das Reflektorelement einen hinsichtlich seiner Grundform um seine Längsmittelachse rotationssymmetrisch ausgebildeten Basiskörper, der im Bereich seiner Lichtaustrittsöffnung entlang einer Ebene geneigt zur Längsmittelachse abgeschnitten, abgesägt oder auf sonstige Weise getrennt ist. Im Stand der Technik ist es bekannt, Reflektorelemente mit im Wesentlichen rotationssymmetrischer Grundform durch Drücken von Aluminiumronden herzustellen. Hierzu wird beispielsweise verwiesen auf die nachveröffentlichten deutschen Patentanmeldungen DE 10 2007 035 396 und DE 10 2007 035 528, die beide auf die Anmelderin zurückgehen, und deren Inhalt hiermit in den Inhalt der vorliegenden Patentanmeldung, auch zum Zwecke der Bezugnahme auf einzelne oder mehrere Merkmale, mit eingeschlossen wird.

Durch Herstellung eines Reflektorelementes mit rotationssymmetrisch ausgebildetem Basiskörper kann die Herstellung des Reflektorelementes verhältnismäßig einfach, gehalten werden. Eine Trennung des Basiskörpers im Bereich seiner Lichtaustrittsöffnung entlang einer Ebene, die geneigt zur Längsmittelachse verläuft, ermöglicht die Erzielung einer Leuchte mit einer nur sehr geringen Einbautiefe, das heißt mit einer kompakten Bauform. Dabei können die zur Erzielung der gewünschten Lichtcharakteristik unwesentlichen Reflektorabschnitte abgetrennt und verworfen werden.

Ein gemäß dieser vorteilhaften Ausgestaltung der Erfindung gefertigter Reflektor ermöglicht eine beliebige Anordnung der Segmente, mit unterschiedlichen, individuell geformten Reflektionsflächen, entlang der Innenseite des Reflektorelementes. Die Anordnung der Segmente kann in einer nicht-rotationssymmetrischen Weise getroffen werden, wohingegen der Basiskörper um seine Längsmittelachse im Wesentlichen rotationssymmetrisch ausgebildet ist. Während die Außenseite des Reflektorelementes vor dem Trennen des Reflektorelementes entlang der Schnittebene rotationssymmetrisch ausgebildet ist, ist die reflektierende Innenseite vorzugsweise in nichtrotationssymmetrischer Weise mit unterschiedlich gewölbten Segmenten besetzt.

Gemäß einer weiteren vorteilhaften Ausgestaltung der Erfindung ist die Spreizlinsenplatte entlang der Schnittebene angeordnet. Dies ermöglicht die Erzielung einer besonders kompakten Bauform der Leuchte.

Gemäß einer weiteren vorteilhaften Ausgestaltung der Erfindung sind zumindest einige der Segmente jeweils von einem Abschnitt eines Zylinders, insbesondere eines kreiszylindrischen Körpers, gebildet. Die Verwendung von zylindrischen Segmenten ermöglicht in besonders vorteilhafter Weise die Erzielung der gewünschten Abstrahlcharakteristik der Leuchte entlang einer ersten Richtung. Vorzugsweise sind sämtliche Segmente auf der Innenfläche des Reflektorelementes von zylindrischen Körpern, insbesondere von kreiszylindrischen Körpern, gebildet.

Die Mittellängsachse des Zylinders, die sogenannte Zylinderachse, ist vorzugseise im Wesentlichen parallel zur Längsmittelachse des Reflektors ausgerichtet oder zu dieser unter einem Winkel von weniger als 45° geneigt. Als Zylinderachse wird diejenige Achse eines zylindrischen Segmentes bezeichnet, die die Längsmittelachse des entsprechenden, die Zylinderoberfläche bereitstellenden Kreiszylinders ist. Die Neigung der Zylinderachsen kann mit dem Abstand des Zylinders von dem Scheitelbereich des Reflektors variieren. Infolge der Variation der Neigungen der Mittelachsen der Zylinder kann die gewünschte Lichtabstrahlcharakteristik in einer besonders optimierten Weise getroffen werden.

Weiter vorteilhaft sind jeweils in einem Anbindungsbereich eines zylindrischen Segmentes an den Reflektor Tangenten an die Außenseite des Reflektors anlegbar. Zwischen der jeweiligen Tangente und der jeweiligen Zylinderachse des zugehörigen Segmentes liegt ein Abweichungswinkel. Dieser Abweichungswinkel kann mit unterschiedlichem Abstand des Segmentes von dem Scheitelbereich besonders vorteilhaft variieren. Hierzu wird Bezug genommen auf die zuvor bereits erwähnte deutsche Patentanmeldung DE 10 2007 035 396 der Anmelderin, die die Vorteile einer entsprechenden Anordnung von Segmenten ausführlich beschreibt, und deren Inhalt hiermit, auch zum Zwecke der Bezugnahme auf einzelne Merkmale, in den Inhalt der vorliegenden Patentanmeldung mit eingeschlossen wird.

Gemäß einer weiteren vorteilhaften Ausgestaltung der Erfindung ist die Neigung der Zylinderachsen der zylindrischen Segmente, insbesondere entlang eines Umfangswinkelbereiches, vorteilhaft derart getroffen, dass sich bei Verwendung einer punktförmigen Lichtquelle diejenigen Lichtstrahlen, die auf diese zylindrischen Segmente treffen, in einem Brennpunkt kreuzen. Dies ermöglicht zum Beispiel die Nachahmung eines im Querschnitt elliptischen Reflektors, obwohl das Reflektorelement einen Grundkörper mit im Querschnitt parabelförmiger Kontur verwendet. Damit können elliptische Reflektoren nachgeahmt werden, wobei zugleich Leuchten sehr geringer Einbautiefen möglich werden.

Gemäß einer weiteren vorteilhaften Ausgestaltung der Erfindung liegt der Brennpunkt außerhalb der Lichtaustrittsöffnung des Reflektorelementes. Weiter vorteilhaft liegt der Brennpunkt nahe der Lichtaustrittsöffnung der Leuchte. Dies ermöglicht eine besonders optimierte Lichtverteilung und eine besonders kompakt bauende Leuchte.

Gemäß einer weiteren vorteilhaften Ausgestaltung der Erfindung weisen die Zylinderachsen mehrerer Zylinder, insbesondere eines nachfolgend noch zu erörternden Teilbereiches der Innenseite des Reflektorelementes mit gleichem Abstand zum Scheitelbereich des Reflektorelementes, die gleiche Neigung zur Längsmittelachse des Reflektorelementes auf. Dies ermöglicht eine besonders gleichmäßige Ausleuchtung der Gebäudefläche.

Gemäß einer weiteren vorteilhaften Ausgestaltung der Erfindung ist die Innenfläche des Reflektorelementes entlang des gesamten Umfanges mit Segmenten besetzt. Dies ermöglicht eine besonders optimierte Anpassung der Leuchte an die gewünschte Abstrahlcharakteristik.

Gemäß einer weiteren vorteilhaften Ausgestaltung der Erfindung ist die Innenfläche des Reflektorelementes in wenigstens zwei Teilbereiche unterteilt. In unterschiedlichen Teilbereichen können Segmente unterschiedlicher Art, zum Beispiel Segmente erster Art und Segmente zweiter Art, angeordnet sein. Segmente erster Art können das Reflektionsverhalten eines im Querschnitt parabelförmigen Reflektors nachahmen, und Segmente zweiter Art können das Reflektionsverhalten eines im Querschnitt elliptischen Reflektors nachahmen. In den unterschiedlichen Teilbereichen können auch unterschiedlich große, in Axialrichtung unterschiedlich lang gestreckte Segmente, und unterschiedlich gewölbte oder unterschiedlich gekrümmte Segmente angeordnet sein. Auch können in den unterschiedlichen Teilbereichen die Spaltenzahl und/oder die Reihenzahl der Segmente variieren. Vorzugsweise erstreckt sich ein erster Teilbereich über einen Umfangswinkel von ca. 180° und ein zweiter Teilbereich über einen Umfangswinkel von ca. 180°. Bei einer anderen Ausgestaltung der Erfindung können auch mehr als zwei Teilbereiche mit unterschiedlichen Umfangswinkeln vorgesehen sein.

Die Segmente können entlang von kreisringartig um die Längsmittelachse des Reflektors verlaufenden Reihen und entlang von quer zu den Reihen verlaufenden Spalten angeordnet sein.

Vorteilhaft ist die Leuchte dadurch gekennzeichnet, dass die zylindrischen Segmente innerhalb eines Teilbereiches eine identische Größe besitzen.

Vorzugsweise sind in einem der beiden Teilbereiche mehr Reihen von Segmente angeordnet, vorzugsweise doppelt so viele Reihen von Segmenten angeordnet, wie in dem anderen Teilbereich. Weiter vorzugsweise sind in dem Teilbereich, in dem mehr Reihen angeordnet sind, die Segmente jeweils zweier, in Axialrichtung voneinander benachbarter Segmente, in Umfangsrichtung versetzt zueinander angeordnet, so dass sich eine ziegelmauerartige Struktur ergibt.

Weiter vorzugsweise ist infolge einer Trennung des hergestellten Reflektorelementes entlang einer Schnittebene schräg zur Längsmittelachse des Reflektorelementes die Zahl der Segmente einer Spalte in Abhängigkeit von dem Umfangswinkel der Spalte unterschiedlich.

Gemäß einer weiteren vorteilhaften Ausgestaltung der Erfindung sind der erste Teilbereich und der zweite Teilbereich von einer Grenzebene getrennt. Vorzugsweise sind in dem ersten Teilbereich Segmente angeordnet, die überwiegend ein Reflektionsverhalten eines im Querschnitt parabelförmigen Reflektors nachahmen, und in dem zweiten Teilbereich Segmente angeordnet, die überwiegend ein Reflektionsverhalten eines im Querschnitt ellipsenförmigen Reflektors nachahmen.

Die Grenzebene und die Schnittebene treffen sich in einer Geraden. Diese Gerade steht senkrecht zur Längsmittelachse des Reflektorelementes.

Als größte Querschnittsfläche des Reflektorelementes wird ein Schnitt durch das Reflektorelement entlang seiner Längsmittelachse bezeichnet, der senkrecht zur Grenzebene erfolgt. Die größte Querschnittsfläche des Reflektorelementes stellt somit einen Querschnitt durch das Reflektorelement dar, der das vom Scheitelbereich am weitesten entfernte Segment und das am freien Rand des Reflektorelementes 180° gegenüberliegend angeordnete Segment enthält.

Bei Betrachtung einer größten Querschnittsfläche des Reflektorelementes sind eine Vielzahl von Segmenten erster Art auf der ersten Seite der Längsmittelachse des Reflektorelementes und eine Vielzahl von Segmenten zweiter Art auf der anderen, gegenüber liegenden Seite der Längsmittelachse des Reflektorelementes angeordnet. Diese Betrachtung verdeutlicht, dass das Reflektorelement zwei wesentliche, charakteristische und hinsichtlich der Lichtstrahlbeziehungsweise Reflektionscharakteristik unterschiedlich geprägte Bereiche aufweist. Derjenige Bereich des Reflektorelementes, der von der auszuleuchtenden Gebäudefläche entfernt ist, weist eine Vielzahl von Segmenten auf, die das Reflektionsverhalten eines elliptischen Reflektors nachahmen, und diejenigen Segmente des Reflektorelementes, die auf der, der auszuleuchtenden Gebäudefläche nahen Seite der Längsmittelachse angeordnet sind, ahmen das Reflektionsverhalten eines im Querschnitt parabelförmigen Reflektors nach.

Gemäß einer weiteren vorteilhaften Ausgestaltung der Erfindung ist bei Betrachtung einer Querschnittsfläche, die senkrecht zu der größten Querschnittsfläche steht, eine symmetrische Ausbildung des Reflektorelementes bezogen auf die Längsmittelachse ersichtlich. Die Betrachtung erfolgt bei dieser Ausgestaltung der Erfindung also entlang einer Ebene, die parallel zur Grenzebene verläuft. Bei Betrachtung von derartigen Querschnittsflächen erscheint das Reflektorelement vollständig symmetrisch ausgebildet. Diese Ausgestaltung ist besonders vorteilhaft, um eine besonders gleichmäßige Ausleuchtung der Gebäudefläche zu erzielen.

Vorteilhaft ist die Leuchte dadurch gekennzeichnet, dass die Lichtquelle im Wesentlichen punktförmig ausgebildet ist.

Weiter vorteilhaft ist die Leuchte dadurch gekennzeichnet, dass als Lichtquelle eine Halogen-Metalldampflampe, insbesondere eine HIT-Lampe, oder eine Halogen-Niedervolt-Glühlampe, oder wenigstens eine LED angeordnet ist.

Gemäß einer weiteren vorteilhaften Ausgestaltung der Erfindung sorgt die Spreizlinsenplatte für eine Aufspreizung des Lichtes in eine Richtung quer zur größten Querschnittsfläche. Die Aufspreizung erfolgt also in einer Richtung entlang der Grenzebene.

Die Spreizlinsenplatte weist eine Vielzahl von Zylinderlinsen auf, beispielsweise gebildet durch mehrere Rippen, die quer zur Grenzebene, das heißt entlang einer Richtung parallel zu der größten Querschnittsfläche, verlaufen. Vorzugsweise verlaufen die Zylinderlinsen in einer Richtung entlang der Schnittebene

Weiter vorteilhaft ist die Leuchte als Wandfluter ausgebildet. Dies ermöglicht eine besonders gleichmäßige Ausleuchtung der Wand.

Weiter vorteilhaft ist die Leuchte als Deckeneinbauleuchte oder als deckenseitig anzuordnender Strahler ausgebildet. Dies ermöglicht eine gleichmäßige Ausleuchtung auch deckennaher Bereiche an der vertikalen Wand.

Vorteilhaft ist die Leuchte dadurch gekennzeichnet, dass die Leuchte die Gebäudefläche gleichmäßig ausleuchtet.

Weiter vorteilhaft ist die Leuchte dadurch gekennzeichnet, dass die Lichtquelle im Brennpunkt oder nahe des Brennpunktes eines parabolförmigen Grundkörpers des Reflektorelementes liegt.

Gemäß einer weiteren vorteilhaften Ausgestaltung der Erfindung ist ein Teilbereich des Reflektors zur Nachahmung einer Lichtverteilung eines Parabol-Reflektors derart relativ zur Lichtquelle angeordnet, dass die daran reflektierten Lichtanteile überwiegend einen der Leuchte fernen Bereich der Leuchte ausleuchten. Gleichermaßen sind vorteilhaft diejenigen Bereiche des Reflektors, die die Lichtverteilung eines im Querschnitt elliptischen Reflektors nachahmen, derartig zur Lichtquelle angeordnet, dass die darin reflektierten Lichtstrahlenanteile überwiegend einen der Leuchte nahen Bereich der Gebäudefläche ausleuchten. Dies ermöglicht eine Ausleuchtung auch sehr hoher vertikaler Gebäudeflächen.

Vorteilhaft ist die Leuchte dadurch gekennzeichnet, dass die Spreizlinsenplatte im Wesentlichen quer zu einer Hauptabstrahlrichtung der Leuchte und geneigt zu der auszuleuchtenden Wand ausgerichtet ist.

Weiter vorteilhaft ist die Leuchte dadurch gekennzeichnet, dass die Leuchte in Lichtabstrahlrichtung hinter der Spreizlinsenplatte einen Darklight-Reflektor-Abschnitt aufweist.

Die Erfindung betrifft des Weiteren ein Verfahren zur Herstellung eines Reflektorelementes aus einem Ausgangsmaterialwerkstück nach Anspruch 30.

Verfahren zur Herstellung von Reflektorelementen, die um ihre Längsmittelachse rotationssymmetrisch ausgebildet sind, sind bekannt.

Die Aufgabe der Erfindung besteht darin, ein bekanntes Verfahren zur Herstellung eines Reflektorelementes derartig weiterzuentwickeln, dass ein Reflektorelement herstellbar ist, das die Entwicklung von Leuchten mit kompakten Bauformen zulässt.

Die Erfindung löst diese Aufgabe mit den Merkmalen des Anspruches 30.

Gegenüber bekannten Verfahren zur Herstellung eines Reflektorelementes ist erfindungsgemäß vorgesehen, dass ein Abschnitt des Reflektorelementes entlang einer Trennebene abgetrennt wird. Die Trennebene ist geneigt zu einer Längsmittelachse des Reflektorelementes angeordnet. Geneigt bedeutet, dass die Abtrennung entlang eines spitzen Winkels zu der Längsmittelachse, vorzugsweise entlang eines Winkels zwischen 30° und 50° erfolgt. Weiter vorzugsweise entspricht die Neigung der Trenn- oder Schnittebene hinsichtlich ihres Winkels dem gewünschten, von dem Darklight-Reflektor bereitzustellenden Abschirmungswinkels der Leuchte im Einbauzustand.

Die Erfindung betrifft des Weiteren eine Leuchte nach Anspruch 31.

Die Aufgabe dieser Erfindung besteht darin, eine vorbekannte, Eingangs beschriebene, durch offenkundige Vorbenutzung bekannt gewordene Leuchte der Anmelderin dahingehend weiter zu entwickeln, dass eine variablere Ausleuchtung von Gebäudeflächen möglich wird.

Die Erfindung löst diese Aufgabe mit den Merkmalen des Anspruches 31.

Das Prinzip der Erfindung besteht im Wesentlichen darin, für die Leuchte ein erstes Reflektorelement vorzusehen, an dessen Innenseite eine Vielzahl von Segmenten mit einer zum Innenraum hin gewölbten Oberfläche angeordnet ist. Darüber hinaus wird ein zweites Reflektorelement vorgesehen, welches das erste Reflektorelement ersetzen kann. Das zweite Reflektorelement weist zu dem ersten Reflektorelement identische, oder sehr ähnliche äußere Dimensionen auf. Dies bedeutet, dass die Grundform des zweiten Reflektorelementes der Grundform des ersten Reflektorelementes entspricht. Auch das zweite Reflektorelement ist schräg oder geneigt zur Längsmittelachse abgeschnitten oder abgetrennt, beziehungsweise weist eine ovale Öffnung auf, deren Umrandung entlang einer Ebene ausgerichtet ist, die geneigt zur Längsmittelachse des Reflektorelementes angeordnet ist. Auch die ovale Lichtaustrittsöffnung ist bei beiden Reflektorelementen identisch dimensioniert, so dass bei dem ersten oder zweiten Reflektorelement die gleiche Spreizlinsenplatte verwendet werden kann.

Das zweite Reflektorelement weist gegenüber dem ersten Reflektorelement allerdings eine unterschiedliche Anzahl oder Art oder Anordnung oder Wölbung von Segmenten auf. Beispielsweise können die Krümmungsradien der Segmente unterschiedlich ausgebildet sein oder es kann eine unterschiedliche Ausrichtung der Zylinderachsen zylindrisch ausgebildeter Segmente vorgesehen sein. Die Art oder Anordnung der Segmente ist in der gewünschten Weise variiert, um eine bestimmte Lichtabstrahicharakteristik zu erzielen. Diese Lichtabstrahlcharakteristik, die von dem zweiten Reflektorelement erzeugt wird, unterscheidet sich von der Lichtabstrahlcharakteristik, die das erste Reflektorelement unter Verwendung einer gleichen Lichtquelle erzeugen kann.

Während mit einem ersten Reflektorelement unter Zuhilfenahme der Spreizlinsenplatte beispielsweise eine gleichmäßige Ausleuchtung der Wand über eine große vertikale Höhe erzeugt werden kann, kann bei Austausch des ersten Reflektorelementes durch das zweite Reflektorelement beispielsweise ein fokaler Schwerpunkt, das heißt ein Lichtschwerpunkt, auf der auszuleuchtenden Gebäudefläche an einem bestimmten Ort erreicht werden.

Das zweite Reflektorelement weist die gleichen Abmessungen auf wie das erste Reflektorelement, so dass es in das vorhandene Leuchtengehäuse mit den gleichen Befestigungsmitteln und unter Verwendung der gleichen Spreizlinsenplatte eingesetzt und dort befestigt werden kann. Dies ermöglicht eine modulare Leuchtenbauform und den Einsatz eines zweiten Reflektorelementes anstelle eines vorhandenen, am Einsatzort eingesetzten, ersten Reflektorelementes. Durch den Ersatz eines ersten Reflektorelementes durch ein zweites Reflektorelement kann eine gewünschte, völlig unterschiedliche Lichtabstrahlcharakteristik erzeugt werden.

Weitere Vorteile der Erfindung ergeben sich aus den nicht zitierten Unteransprüchen, sowie anhand der nun folgenden Beschreibung der in den Figuren dargestellten Ausführungsbeispieles. In den Figuren zeigen:
- Fig. 1: ein erstes Ausführungsbeispiel der erfindungsgemäßen Leuchte in einer sehr schematischen Darstellung mit einem wannenförmigen Grundkörper, der bodenseitig angeordnet ist und eine Gebäudewand ausleuchtet,
- Fig. 2: ein schematischen, seitlichen Querschnitt durch die Leuchte der Fig. 1, etwa entlang Schnittlinie II-II in Fig. 1,
- Fig. 3: eine schematische Darstellung der Leuchte der Fig. 2, unter Darstellung des Grundkörpers und Anordnung der Lichtquelle, etwa entlang der Ansichts-Schnittlinie III-III in Fig. 2,
- Fig. 4: in einer Darstellung gemäß Fig. 1 eine schematische Ansicht einer auszuleuchtenden Gebäudefläche in einer ersten Beleuchtungssituation,
- Fig. 5: in einer Darstellung gemäß Fig. 4 die Veranschaulichung einer zweiten, geänderten Beleuchtungssituation,
- Fig. 6: in einer schematischen Darstellung, ähnlich einer Darstellung der Fig. 2, ein weiteres Ausführungsbeispiel einer erfindungsgemäßen, als Deckeneinbauleuchte ausgebildeten Leuchte,
- Fig. 7: das mit zahlreichen Segmenten auf seiner Innenseite versehene Reflektorelement der Leuchte der Fig. 6 in einer perspektivischen Alleindarstellung,
- Fig. 8: in einer schematischen Darstellung analog der Darstellung der Fig. 1, eine Einbausituation zur Ausleuchtung einer Gebäudefläche, wobei die Leuchte der Fig. 2 deckenseitig montiert ist,
- Fig.9: in Alleindarstellung eine Spreizlinsenplatte, die bei der Leuchte der Fig. 6 eingesetzt wird, in einer schematischen, nicht maßstäblichen Darstellung, etwa gemäß Ansichtslinie IX- IX in Fig. 6, wobei ein Darklight-Reflektorabschnitt der Leuchte der Fig. 6 der Übersichtlichkeit halber weggelassen ist,
- Fig. 10: die Linsenplatte in einer schematischen teilgeschnittenen Darstellung, etwa gemäß Schnittlinie X-X in Fig. 9,
- Fig. 11: ein Diagramm einer Beleuchtungsstärkeverteilung, die sich bei Einsatz einer Leuchte gemäß Fig. 6 in einer Einbausituation gemäß Fig. 8 auf der auszuleuchtenden Wand15 ergibt, falls die in der Leuchte der Fig. 6 vorgesehene Spreizlinsenplatte weggelassen wird,
- Fig.12: in einer Darstellung gemäß Fig. 11 die Beleuchtungsstärkeverteilung auf der auszuleuchtenden Wand 15 bei Einsatz einer Leuchte gemäß Fig. 6 mit Spreizlinsenplatte,
- Fig. 13: das Reflektorelement der Fig. 7 in einer Innenansicht, etwa gemäß Ansichtspfeil XIII in Fig. 7,
- Fig. 14: in einer schematischen Querschnittsansicht das Reflektorelement der Fig. 13, etwa entlang der Schnittlinie VI- VI, wobei die Darstellung der Fig. 14 das Reflektorelement unmittelbar nach dessen Fertigstellung, vor Durchführung eines Schneide- oder Trennschnittes zeigt, und wohingegen das Reflektorelement der Fig. 13 das Reflektorelement nach Fertigstellung, das heißt nach Durchführung des Trennschnittes und nach Abtrennung des Trennstücks 75 zeigt,
- Fig. 15: eine vergrößerte Detaildarstellung eines Randbereiches des Reflektorelementes der Fig. 14 gemäß Teilkreis XV in Fig. 14,
- Fig. 16: in einer Darstellung, vergleichbar der Fig. 14, das Reflektorelement in einer schematischen Ansicht unter Darstellung des Verlaufes der Zylinderachsen, und
- Fig. 17: in einer Liniendarstellung in einer deutlich vergrößerten Ansicht einen in Fig. 13 mit Teilkreis XVII bezeichneten Bereiches der Innenfläche des Reflektorelementes mit Segmenten.

Ein erstes Ausführungsbeispiel der erfindungsgemäßen Leuchte ist in den Figuren in ihrer Gesamtheit mit 10 bezeichnet. Der nachfolgenden Figurenbeschreibung sei vorausgeschickt, dass auch, soweit in den Figuren unterschiedliche Teile oder Elemente bezeichnet werden, diese mit gleichen Bezugszeichen, teilweise unter Hinzufügung kleiner Buchstaben, bezeichnet sind. Dies gilt auch für unterschiedliche Ausführungsbeispiele der Erfindung.

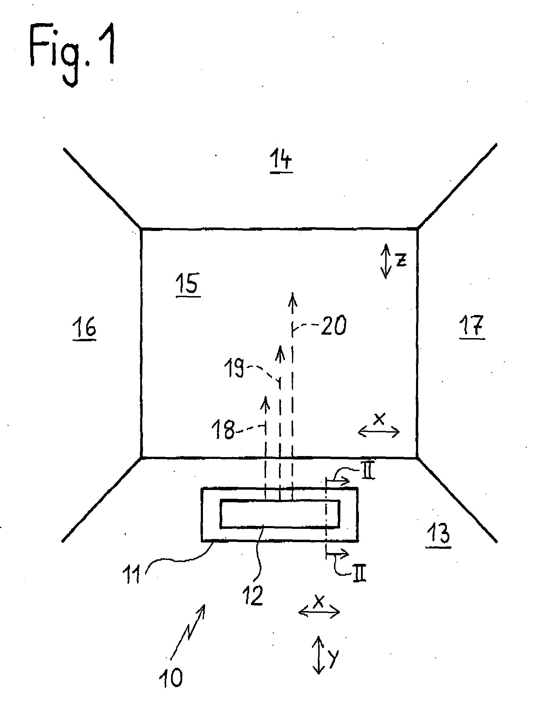

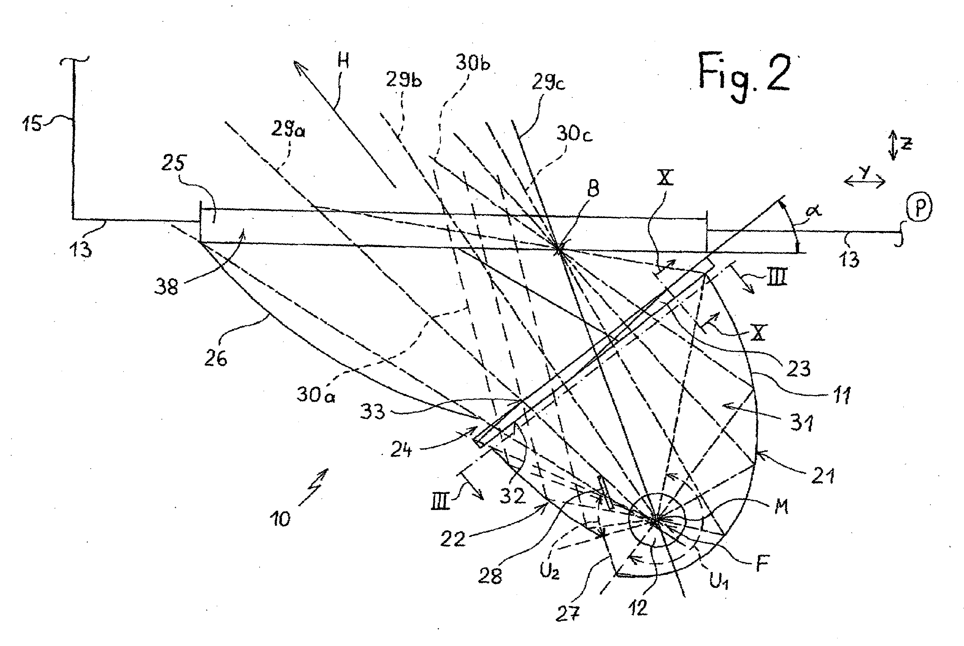

Ausweislich Fig. 1 ist die erfindungsgemäße Leuchte 10 mit einem Grundkörper 11 und mit einer Lichtquelle 12 ausgestattet und als Bodeneinbauleuchte ausgebildet. Sie ist hierzu in den Boden 13 eines Gebäuderaumes oder eines Außenraumes eingesetzt, und, wie nachfolgend aus Fig. 2 deutlich wird, im Wesentlichen bündig zur Oberseite der Bodenfläche 13 angeordnet.

Die Leuchte ist bei dem Ausführungsbeispiel der Fig. 1 bis 3 als axial langgestreckte Leuchte ausgebildet mit einem im Wesentlichen wannenförmigen Grundkörper 11.

Fig. 1 verdeutlicht, dass die Leuchte in der Einbausituation gemäß Fig. 1 bodenseitig eingebaut ist und zur Ausleuchtung der Gebäudewand 15 dient. Unterschiedliche Pfeile 18, 19 und 20 sollen verdeutlichen, dass unterschiedliche vertikale Flächenbereiche der Gebäudefläche 15 ausgeleuchtet werden können. Alternativ kann die Leuchte 10 aber auch deckenseitig, das heißt in oder an der Deckenwand 14, montiert sein und gleichermaßen die Gebäudefläche 15 ausleuchten. Schließlich ist es auch möglich, dass die Gebäudeleuchte 10 an der Seitenwand 16 oder 17 angeordnet ist, um die Gebäudefläche 15 auszuleuchten. Gleichermaßen ist vorstellbar, dass die als Bodeneinbauleuchte ausgebildete Leuchte 10 in einer Einbausituation gemäß Fig. 1 nicht die Gebäudewand 15, sondern die Gebäudewand 16 oder die Gebäudewand 17 ausleuchtet.

Fig. 1 verdeutlicht durch die Pfeile x, y und z das Raum-Koordinatensystem. Der Doppelpfeil x beschreibt die Axialerstreckung der Leuchte, der Doppelpfeil z eine Richtung quer zur Axialerstreckung, und zwar die vertikale Höhe. Der Doppelpfeil y, der in Fig. 1 nur unter Bezugnahme auf die Bodenfläche 13 angedeutet ist, beschreibt eine weitere Quererstreckung zur Axialrichtung x, und zwar die Raumtiefe.

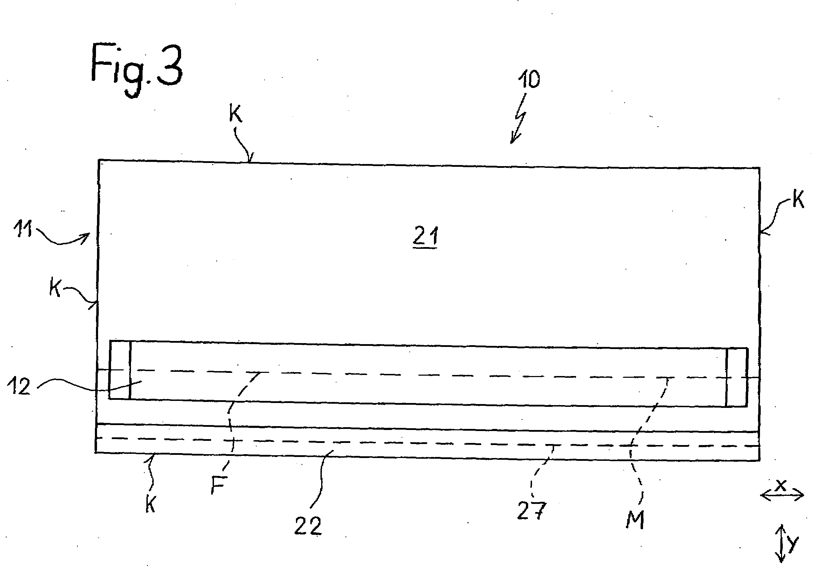

Wie sich am besten aus Fig. 2 ergibt, ist der Grundkörper 11 im Wesentlichen schalenförmig ausgebildet. Im Innenraum 31 des Grundkörpers 11 ist die Lichtquelle 12 angeordnet. Diese ist als axial langgestreckte Lichtquelle ausgebildet, beispielsweise als axial langgestreckte HIT-Lampe. Der Grundkörper 11 weist einen im Querschnitt elliptischen Wandabschnitt 21 auf. Dem elliptischen Wandabschnitt 21 ist ein Brennpunkt F zugeordnet, wobei die Lichtquelle 12 derart relativ zu dem elliptischen Wandabschnitt 21 angeordnet ist, dass ihre Mittellängsachse M (Fig. 3) entlang der Brennpunktachse F angeordnet ist. Diejenigen Strahlen, die von der Lichtquelle 12 ausgehen und an der elliptischen Reflektorfläche 21 reflektiert werden, treffen sich daher in einem zweiten Brennpunkt B, der im Bereich eines Abschlussglases 25 der Leuchte liegt. Auch der angedeutete Lichtstrahl 29c verläuft als Direktlichtanteil durch den zweiten Brennpunkt B.

Der Grundkörper 11 weist darüber hinaus noch einen zweiten Reflektorwandabschnitt 22 auf, der im Querschnitt parabelförmig gebildet ist. Der Wandabschnitt 22 ist derart angeordnet, dass der Brennpunkt der Parabel mit dem Brennpunkt F des elliptischen Wandabschnittes 21 zusammenfällt.

Bei einer nicht dargestellten Ausführungsform der Erfindung ist der im Querschnitt parabelförmige Wandabschnitt des Reflektors derart angeordnet, dass der Brennpunkt des parabelförmigen Wandabschnittes von dem Brennpunkt des elliptischen Wandabschnittes 21 beabstandet ist. Die Lichtquelle kann dann entweder an dem Brennpunkt des elliptischen Wandabschnittes oder an dem Brennpunkt des parabelförmigen Wandabschnittes oder zwischen den beiden Brennpunkten oder in der Nähe der beiden Brennpunkte angeordnet sein.

Ausgehend von der Lichtquelle 12 gelangen direkte Lichtanteile, angedeutet durch die Strahlen 29a, 29b und 29c, und indirekte Lichtanteile, angedeutet durch die Strahlen 30a, 30b und 30c auf eine Spreizlinsenplatte 23. Diejenigen indirekten Lichtanteile, die ausgehend von der Lichtquelle 12 vor dem Auftreffen auf die Spreizlinsenplatte 23 an dem parabelförmigen Wandabschnitt 22 reflektiert werden, treffen auf die Linsenplatte sämtlich entlang einer parallelen Hauptabstrahlrichtung H, veranschaulicht durch den Lichtstrahl 30a.

Die Spreizlinsenplatte kann beispielsweise ein Klarglas oder ein leicht mattiertes Glas sein, welches mit zylindrischen Linsen ausgestattet ist. Die Linsenplatte weist bei dem Ausführungsbeispiel der Fig. 2 eine im Wesentlichen rechteckige Grundform auf, die etwa der Kontur K des Grundkörpers 11 gemäß Fig. 3 entspricht. Die Spreizlinsenplatte kann ein Prägeglas oder ein Flachglas sein.

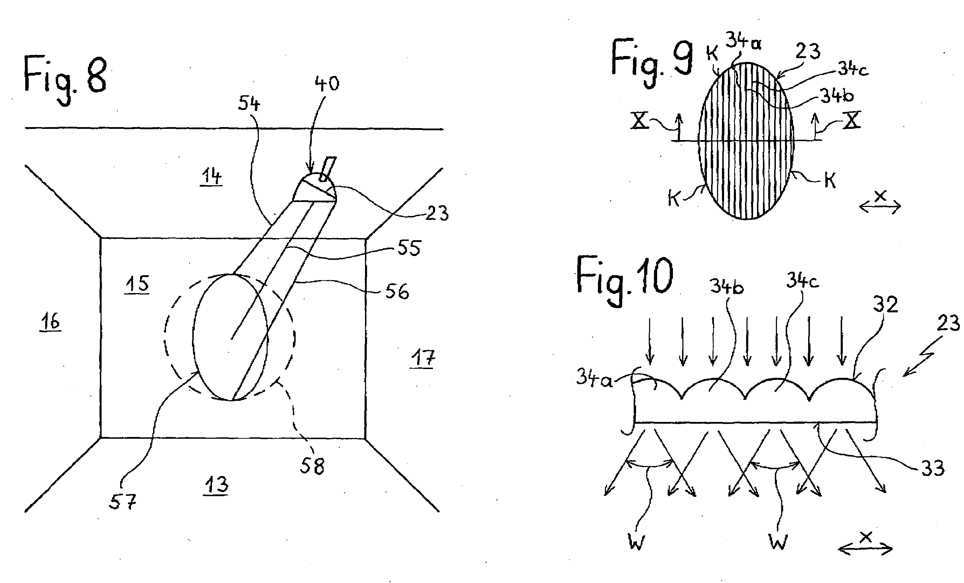

Der Querschnitt der Linsenplatte ist gemäß Schnittlinie X-X der Fig. 2 in Fig. 10 schematisch angedeutet. Die Spreizlinsenplatte 23 kann demzufolge eine Innenseite 32 und eine Außenseite 33 aufweisen. Auf der Innenseite 32 der Linsenplatte 23 sind eine Vielzahl von zylindrischen Linsen 34a, 34b und 34c angeordnet. In Abhängigkeit der Brennweite der zylindrischen Linsen findet eine Aufweitung eines in Fig. 10 angedeuteten parallelen Strahlenbündels unter einem Aufweitungswinkel w statt.

Eine vergleichbare Aufweitung findet selbstverständlich auch statt, wenn das auf die Innenseite 32 der Spreizlinsenplatte auftretende Lichtbündel, wie bei dem Ausführungsbeispiel der Leuchte der Fig. 1 bis 3 der Fall, nicht gänzlich parallel auftrifft sondern aus unterschiedlichen Richtungen kommend, auftrifft.

Die zylindrischen Linsen 34a, 34b, 34c weisen entlang einer Richtung quer zur Papierebene der Fig. 10 einen konstanten Querschnitt auf. Jede Zylinderlinse 34a, 34b, 34c ist insoweit langgesteckt ausgebildet. Die Längserstreckung der zylindrischen Linsen steht insoweit quer zur axialen Längserstreckung x des wannenförmigen Grundkörpers 11 und quer zu der axialen Längserstreckung der Lichtquelle 12.

Die zylindrischen Linsen können eine Axialerstreckung aufweisen, die der Axialerstreckung der Spreizlinsenplatte 23 entspricht. Bei einer alternativen, nicht dargestellten Ausführungsform einer Spreizlinsenplatte 23 können die zylindrischen Linsen auch von axial kurz gehaltenen Abschnitten zylindrischer Linsen bereitgestellt sein.

Während die Linsen bei dem Ausführungsbeispiel der Fig. 10 als konvexe Linsen auf der Innenseite 32 ausgebildet sind, können alternativ auch konkave Linsen unter Erzielung des gleichen lichttechnischen Effekts verwendet werden.

Aus Fig. 2 heraus wird deutlich, dass die Anordnung des elliptischen Wandabschnittes 21 in Kombination mit der Anordnung des parabelförmigen Wandabschnittes 22 auf der vertikalen Wand 15 eine Beleuchtungsstärkeverteilung generiert, die die Gebäudefläche 15 in der gewünschten Weise ausleuchtet. Das von der parabelförmige Reflektorfläche 22 reflektierte, und parallel abstrahlende Strahlenbündel wird verhältnismäßig weit nach oben abgelenkt und kann auf diese Weise einen an der vertikalen Gebäudewand 15 recht weit oben angeordneten Gebäudeflächenbereich ausleuchten. Dieser Lichtstrahlenanteil soll durch den Pfeil 20 in Fig. 1 angedeutet werden. Der parabelförmige Reflektorabschnitt 22 dient somit im Wesentlichen dazu, indirekte Lichtanteile weit nach oben zu lenken. Damit kann beispielsweise eine besonders hohe, das heißt sich in z-Richtung weit nach oben erstreckende Gebäudewand bis weit nach oben ausgerichtet werden. Im Falle eines deckenseitigen Einbaus einer Leuchte 10 gemäß Fig. 2 kann dementsprechend ein recht weit unten angeordneter Bereich einer vertikalen Gebäudefläche noch mit ausgeleuchtet werden.

Allgemein kann festgestellt werden, dass durch Anordnung des parabelförmigen Wandabschnittes 22 ein Gebäudeflächenbereich mit ausgeleuchtet werden kann, der von der Leuchte 10 weit entfernt ist.

Zugleich ermöglicht die Anordnung des elliptischen Wandabschnittes 21 die Ausleuchtung eines der Leuchte 10 nahen, bezogen auf Fig. 1 mittleren Gebäudeflächenbereiches, etwa angedeutet durch den Pfeil 19 in Fig. 1. Schließlich können die direkten Lichtanteile, angedeutet durch die Stahlen 29a, 29b in Fig. 2 beziehungsweise angedeutet durch den Pfeil 18 in Fig. 1 untere, das heißt der Leuchte nahe Gebäudeflächenbereiche mit ausleuchten.

Angemerkt sein, dass die vorherige Betrachtung aus Gründen der Übersichtlichkeit sehr vereinfacht dargestellt ist. Im Ergebnis kann aber festgestellt werden, dass durch Verwendung und Mischung von direkten Lichtanteilen und indirekten Lichtanteilen, wobei die indirekten Lichtanteile einerseits an elliptisch geformten Reflektorabschnitten und an parabelförmigen Reflektorabschnitten reflektiert werden, insgesamt eine besonders gleichmäßige Beleuchtungsstärkeverteilung erzielt werden kann. Damit können sowohl der Leuchte nahe Gebäudeflächenbereiche als auch der Leuchte ferne Gebäudeflächenbereiche homogen ausgeleuchtet werden können.

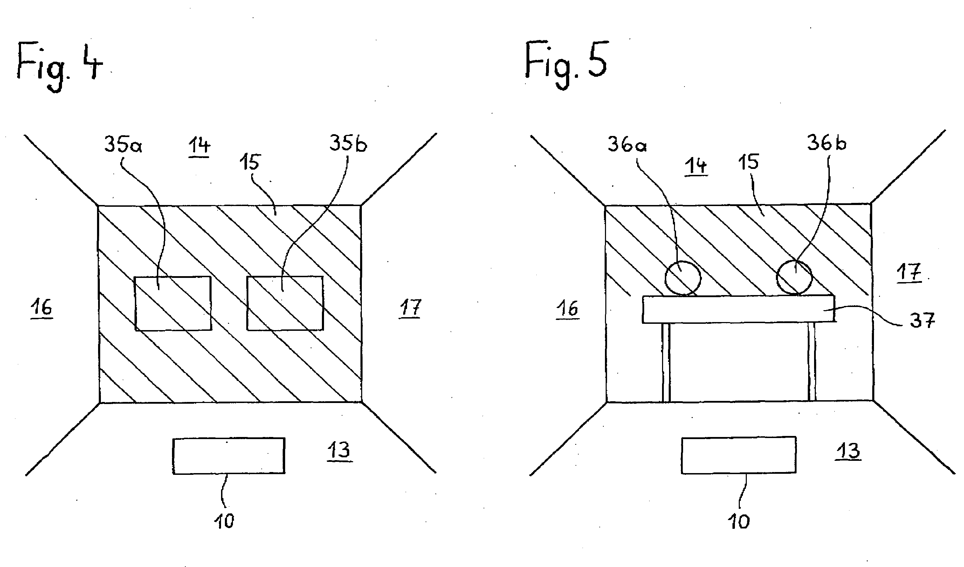

Zur weiteren Veranschauung des erfindungsgemäßen Prinzips wird auf die Fig. 4 und 5 verwiesen, die in ihrer Darstellung der Fig. 1 im Wesentlichen entsprechen.

Durch die auf der vertikalen Gebäudewand 15 angedeutete Schraffur soll der Bereich angedeutet werden, der durch die Leuchte 10 ausgeleuchtet werden soll. Wie Fig. 4 erkennen lässt, soll die gesamte vertikale Gebäudewand 15 im Wesentlichen gleichmäßig ausgeleuchtet werden. Eine solche Beleuchtungssituation ist beispielsweise gewünscht, wenn in einem Museum Gemälde 35a, 35b ausgeleuchtet werden sollen.

Im Unterschied dazu ist in Fig. 5 eine Beleuchtungssituation auf einer vertikalen Wand 15 dargestellt, in der nur ein oberer Bereich der Wand ausgeleuchtet werden soll, beispielsweise weil in dem oberen Bereich der vertikalen Wand Waren 36a, 36b, zum Beispiel auf einem Regal 37 angeordnet sind, die hervorgehoben ausgeleuchtet werden sollen. Beide Beleuchtungssituationen der Fig. 4 und 5 können mit einer Leuchte 10 erreicht werden, wobei die jeweils zu verwendende Leuchte unterschiedliche Reflektorabschnitte 21, 22 aufweist.

Aus Fig. 2 ist des Weiteren ersichtlich, dass in Lichtabstrahlrichtung, beispielsweise in Hauptabstrahlrichtung H, hinter der Spreizlinse 23 ein Darklight-Reflektorabschnitt 26 angeordnet ist. Der Darklight-Reflektor 26 sorgt für eine Abschirmung eines sich etwa in dem Raumwinkelbereich P befindenden Betrachters unter seinem Abschirmwinkel α. Der Abschirmungswinkel α kann beispielsweise 40° betragen. Der Darklight-Reflektor 26 sorgt in einer an sich bekannten Weise dafür, dass ein Betrachter, der sich in dem Bereich P befindet, keine von dem Darklight-Reflektor 26 reflektierten Lichtstrahlen sieht.

Unter anderem aus fertigungstechnischen Gründen ist bei dem Ausführungsbeispiel der Fig. 2 vorgesehen, dass ein plan ausgebildetes Zwischenelement 27 den elliptischen Wandabschnitt 21 mit dem parabelförmigen Wandabschnitt 22 verbindet. Das Zwischenelement weist vorzugsweise nur eine geringe oder keine lichttechnische Funktion auf, und dient insbesondere der mechanischen Befestigung der beiden zylindrischen Wandabschnitte 21 und 22 aneinander, insbesondere zur Erhöhung der mechanischen Stabilität. Auch der Zwischenabschnitt 27 kann allerdings aus einem hoch reflektierenden Material bestehen, und unter Umständen zur Lichtleitung beitragen.

Des Weiteren deutet das Ausführungsbeispiel der Fig. 2 ein Abblendelement 28 an, welches in Lichtabstrahlrichtung der Lichtquelle 12 vor dem parabelförmigen Wandabschnitt 22 angeordnet ist. Das Abblendelement 28 blendet einen geringen Abschnitt des parabelförmigen Wandabschnittes ab und kann dafür sorgen, dass die Lichtlenkung in einer gewünschten Weise erfolgt. Bei dem Ausführungsbeispiel der Fig. 2 verläuft der angedeutete Lichtstrahl 30a durch das Abblendelement 28 hindurch. Dies soll andeuten, dass das Abblendelement 28 bei einer Ausführungsform der Erfindung auch entfallen kann. Für den Fall, dass ein Abblendelement 28 in dem Lichtweg angeordnet ist, ist dieses vorzugsweise lichtundurchlässig ausgebildet.

Die Spreizlinsenplatte 23 ist quer zur Hauptabstrahlrichtung H der Leuchte 10 ausgerichtet. Dies bedeutet, dass die Hauptabstrahlrichtung der Leuchte, die mit H bezeichnet ist, im Wesentlichen normal zu der im Wesentlichen plan ausgebildeten Spreizlinsenplatte angeordnet ist. Die Spreizlinsenplatte ist geneigt, insbesondere unter dem Abschirmwinkel α von 40°, geneigt zu der vertikalen, auszuleuchtenden Gebäudefläche 15 angeordnet. Die insbesondere aus Klarglas bestehende Abschlussplatte 25 der Leuchte ist parallel zur Bodenfläche 13 angeordnet. Im Falle einer Ausbildung der Leuchte als Bodeneinbauleuchte, gemäß Fig. 2, ist die Abschlussplatte 25 insbesondere bündig zur Bodenfläche ausgerichtet und vermeidet auf diese Weise jegliche Stolperkante. Die Abschlussplatte kann vorzugsweise auch betreten werden.

Im Falle einer Ausbildung der in Fig. 2 dargestellten Leuchte als Deckeneinbauleuchte oder deckenseitig festzulegende Leuchte kann auf die Abschlussplatte 25 unter Umständen auch gänzlich verzichtet werden, so dass die Lichtaustrittsöffnung 38 der Leuchte völlig frei ist.

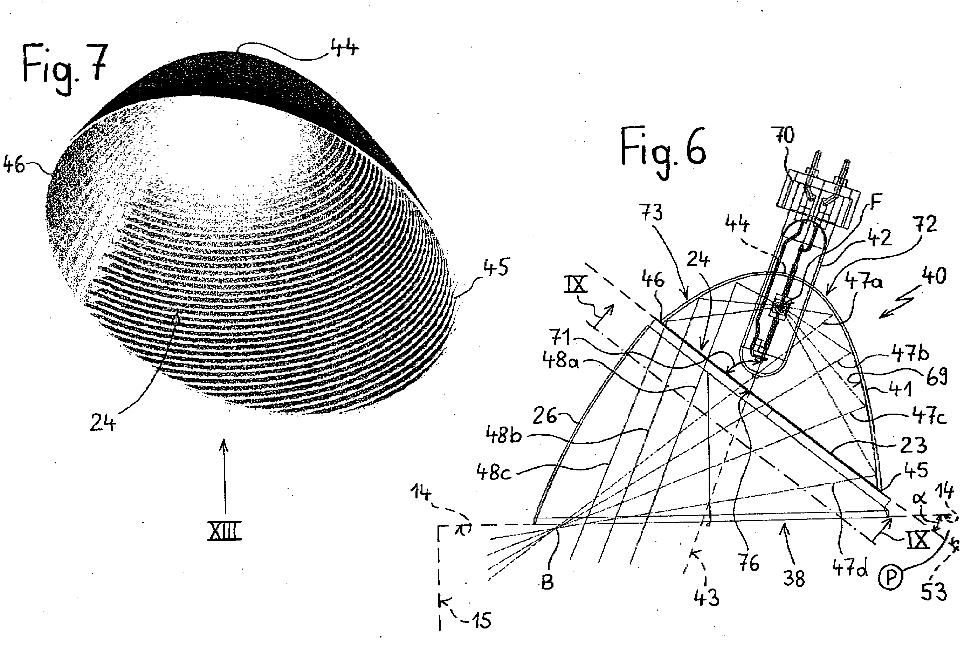

Anhand der Fig. 6 bis 17 soll nunmehr ein weiteres Ausführungsbeispiel einer erfindungsgemäßen Leuchte 40 beschrieben werden:

Fig. 6 zeigt eine erfindungsgemäße Leuchte 40, die als Deckeneinbauleuchte zum Einbau an einer Decke 14 ausgebildet ist. Mit der Leuchte 40 soll eine vertikale Wand 15 ausgeleuchtet werden, so dass es sich in Übereinstimmung mit der Fig. 1 um die gleiche auszuleuchtende Gebäudefläche 15, im Unterschied zu der Fig. 1 allerdings um eine deckenseitig montierte Leuchte 40 handelt.

Es sei angemerkt, dass die erfindungsgemäße Leuchte 40 auch als Deckenaufbauleuchte oder als Strahler ausgebildet sein kann, das heißt insbesondere beweglich auf einem Strahlerträger, zum Beispiel montiert an einer Stromschiene, befestigt sein kann.

Die Leuchte 40 umfasst ausweislich Fig. 6 einen Reflektor 41, ein Leuchtmittel 42, eine Spreizlinsenplatte 43 und einen Darklight-Reflektorabschnitt 46. Im Bereich der Lichtaustrittsöffnung 38 der Leuchte 40 kann gegebenenfalls noch ein Abschlussglas angeordnet sein. Dieses ist aber beim deckenseitigen Einbau aber in der Regel entbehrlich.

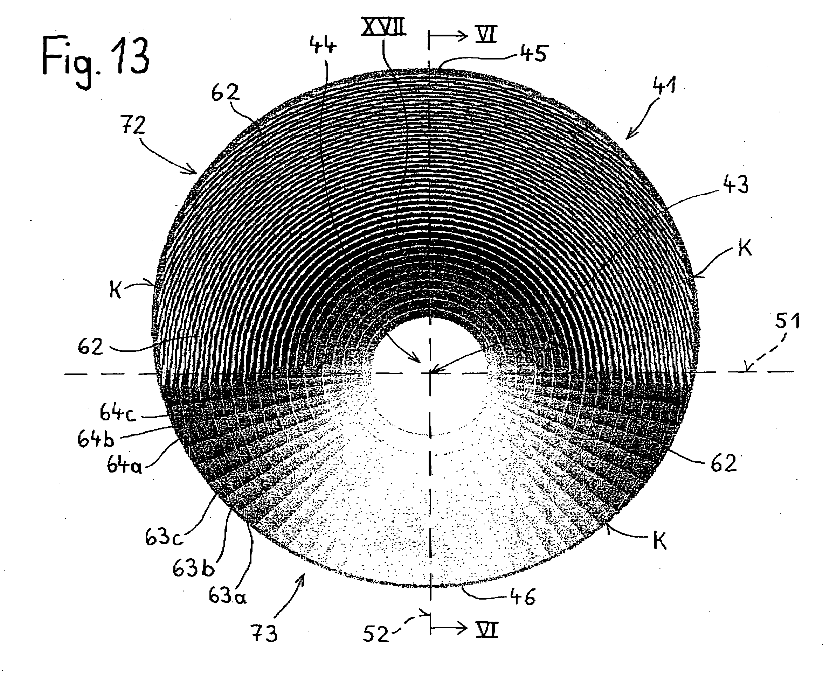

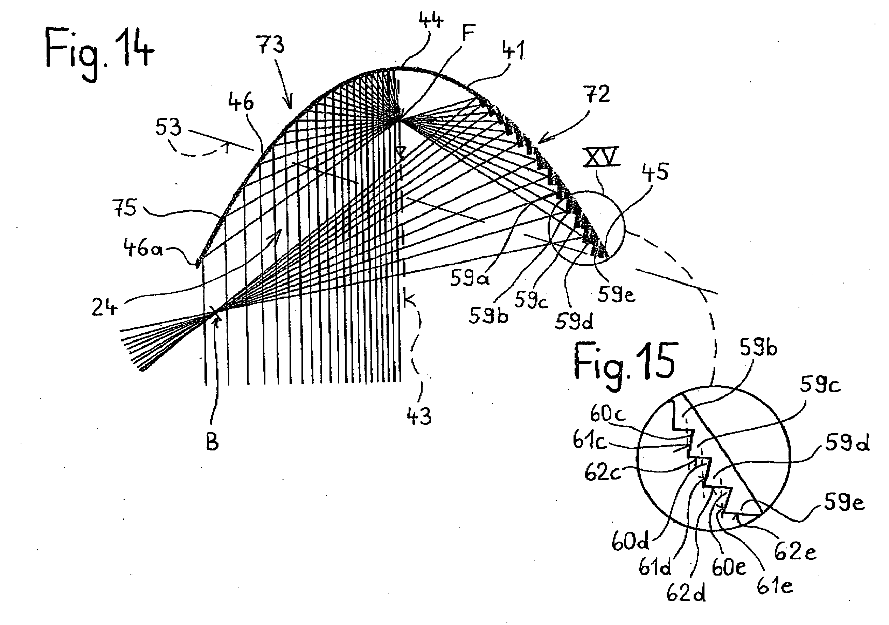

Das Reflektorelement 41 ist in Fig. 7 in Alleindarstellung in einer perspektivischen Schrägansicht, und in Fig. 13 in Alleindarstellung in Draufsicht, etwa entlang der Blickrichtung XIII. in Fig. 7, dargestellt. Das Reflektorelement weist eine Innenseite 69 auf, die mit zahlreichen gewölbten Segmenten besetzt sind. Die geometrische Ausbildung dieser Segmente wird erst später anhand der Fig. 14 bis 17 erläutert.

Das Reflektorelement 41 weist eine Grundform mit im Wesentlichen parabelförmigem Querschnitt auf. Diese parabolische Grundform ergibt sich bei Betrachtung des Querschnittes des Reflektorelementes 41 gemäß Fig. 6 vom bezüglich Fig. 6 linken Randbereich 46 über den Scheitelmittelbereich 44 bis zu dem in Fig. 6 rechten Randbereich 45. Der dem parabolischen Grundkörper zugeordnete Brennpunkt ist in Fig. 6 mit F bezeichnet. Angemerkt ist in diesem Zusammenhang allerdings, dass Fig. 6 ein Reflektorelement 41 bei einer fertig montieren Leuchte 40 zeigt, bei der ein ursprünglich hinsichtlich seiner Grundform im Wesentlichen rotationssymmetrisches Reflektorelement 41 bereits abgetrennt oder geschnitten wurde. Das Herstellungsverfahren wird später auch noch detailliert beschrieben.

Ein Leuchtmittel 42 ist in dem oder nahe des Brennpunktes F der parabelförmigen Grundform des Reflektors 41 angeordnet. Bei dem Ausführungsbeispiel der Fig. 6 handelt es sich bei dem Leuchtmittel 42 um eine Halogen-Metalldampflampe. Eine solche Metalldampflampe weist ein sehr kleines, nahezu punktförmiges leuchtendes Volumen auf, so dass man in diesem Zusammenhang auch von einer punktförmigen Lichtquelle spricht.

Das Leuchtmittel 42 ist auf nicht dargestellte Weise beispielsweise an einem Leuchtengehäuse festgelegt. An dem Leuchtengehäuse kann auch das Reflektorelement 41 unmittelbar, gegebenenfalls auch unter Zuhilfenahme von Befestigungselementen, die mit einem Lampensockel 70 kooperieren, festgelegt sein. Das Leuchtengehäuse ist in Fig. 6 aus Gründen der Übersichtlichkeit nicht dargestellt. Auch die elektrischen Zuleitungen sowie gegebenenfalls elektronische Steuerleitungen für ein Vorschaltgerät für das Leuchtmittel 42 sind in Fig. 6 der Einfachheit halber weggelassen.

Das Reflektorelement 41 besitzt eine um seine Längsmittelachse 43 im Wesentlichen rotationssymmetrische Grundform. Fig. 14 zeigt das Reflektorelement 41 der Fig. 6 in Alleindarstellung unmittelbar nach dem Herstellungsvorgang. Dem Betrachter wird deutlich, dass sich das Reflektorelement 41 ursprünglich von dem bezüglich Fig. 14 linken Randbereich 46a über den Scheitelbereich 44 bis zu dem bezüglich Fig. 14 rechten Randbereich 45 erstreckt. Entlang der Schnittebene 53 ist das Reflektorelement 41 nach dem Herstellvorgang abgeschnitten oder abgetrennt worden. Die Schnittebene 53 verläuft ausweislich Fig. 6 bei dem Ausführungsbeispiel insbesondere unter einem Winkel 71 von ca. 70° relativ zu der Längsmittelachse 43 des Reflektors 41.

Entlang der Schnittebene 53 ist bei der Leuchte 40 nach Fig. 6 eine Spreizlinsenplatte 23 angeordnet. Die Spreizlinsenplatte 23 entspricht hinsichtlich ihrer Funktion der zuvor bei dem Ausführungsbeispiel der Fig. 2 erörterten Spreizlinsenplatte. Da infolge einer Abtrennung des ursprünglich hinsichtlich seiner Grundform um die Längsmittelachse 43 im Wesentlichen rotationssymmetrisch ausgebildeten Reflektorelementes 41 nunmehr eine ovale Lichtaustrittsöffnung 24 bei dem Reflektorelement 41 besteht, ist, wie sich infolge der Ansicht der Fig. 9 in übertriebener Darstellung ergibt, auch die Spreizlinsenplatte 23 oval ausgebildet. Im Übrigen zeigt auch die Innenansicht gemäß Fig. 13 in maßstäblicher Darstellung, die ovale Kontur der Lichtaustrittsöffnung 24.

Wie sich am deutlichsten aus der Innenansicht des Reflektorelementes 41 gemäß Fig. 13 ergibt, ist die gesamte Innenseite des Reflektorelementes in zwei Teilbereiche 72 und 73 unterteilt. Die beiden Teilbereiche 72 und 73 sind entlang einer Grenzebene 51 voneinander getrennt.

Die Segmente des Teilbereiches 72 dienen vornehmlich dazu, das Reflektionsverhalten eines im Querschnitt elliptischen Reflektors nachzuahmen. Die Segmente, die in dem Teilbereich 73 des Reflektors 41 angeordnet sind, dienen im Wesentlichen dazu, das Reflektionsverhalten eines im Querschnitt parabelförmigen Reflektors nachzuahmen.

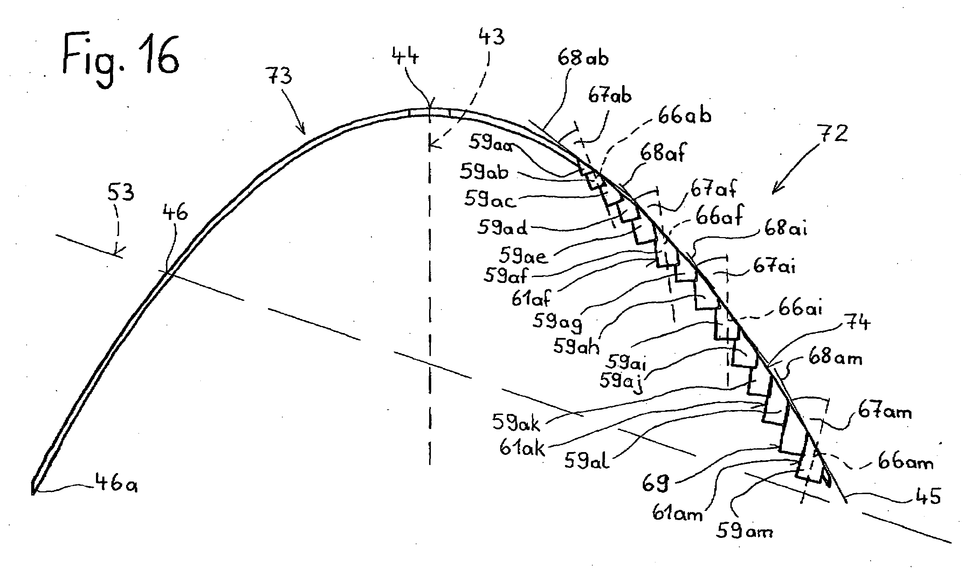

In den Fig. 14 und 16 sind der Übersichtlichkeit halber lediglich die Segmente des ersten Teilbereiches 72 angedeutet und die Segmente des zweiten Teilbereiches 73 weggelassen.

Wie sich bei Betrachtung der Fig. 14 ergibt, erstrecken sich vom Scheitelbereich 44 bis zu dem bezüglich Fig. 14 rechten Randbereich 45 des Reflektorelementes 41 zahlreiche Segmente, von denen lediglich die randnahen Segmente 59a, 59b, 59c, 59d, 59e bezeichnet sind. Die angedeuteten Lichtstrahlen verdeutlichen, dass die von der Lichtquelle im Brennpunkt F ausgehenden Lichtstrahlen an den Segmenten reflektiert werden und sich in einem außerhalb der Lichtaustrittsöffnung 24 des Reflektorelementes 41 angeordneten zweiten Brennpunkt B treffen.

Die von dem Brennpunkt F ausgehenden Lichtanteile, die auf die nicht dargestellten Segmente des zweiten Teilbereiches 73 treffen, können als parallele Strahlen den Reflektor 41 verlassen.

Fig. 15 deutet an, dass zwischen jeweils zwei in Axialrichtung entlang der Längsmittelachse 43 benachbarten Segmenten des ersten Teilbereiches 72, beispielsweise zwischen den benachbarten Segmenten 59b und 59c, auch radiale Hinterschneidungen 60c angeordnet sein können. Während die in Fig. 15 gestrichelten Linien solche Geraden andeuten, die parallel zur Längsmittelachse 43 des Reflektorelementes verlaufen, verdeutlichen die mit 60c, 60d und 60e bezeichneten Freiräume, dass zwischen jeweils zwei benachbarten Segmenten 59b, 59c, 59d, 59e radiale Hinterschneidungen angeordnet sein können. Derartige radiale Hinterschneidungen sind in der zuvor erwähnten nachveröffentlichten deutschen Patentanmeldung DE 10 2007 035 528 der Anmelderin eingehend beschrieben, so dass zum Zwecke der Vermeidung von Wiederholungen auf die dortigen Ausführungen, auch zum Zwecke der Aufnahme einzelner Merkmale, hiermit Bezug genommen werden kann.

Angemerkt sei, dass die Anordnung derartiger radialer Hinterschneidungen bei der erfindungsgemäßen Leuchte vorteilhaft, aber nicht zwingend erforderlich ist.

Fig. 15 macht des Weiteren deutlich, dass die zur Reflektion beitragenden Flächen der Segmente 59b, 59c, 59d, 59e mit dem Bezugszeichen 61c, 61d, 61e bezeichnet sind. Diese zylindrischen Flächen bilden die eigentlichen, lichttechnisch wirksamen Flächen dieses Reflektorabschnittes. Dahingegen sind die zur Lichtaustrittsöffnung 24 hingewandten stirnseitigen Flächen, beispielsweise die Flächen 62d und 62e, ohne irgendeinen lichttechnischen Einfluss auf das Reflektionsverhalten des Reflektors 41.

Diese Stirnflächen sind in Fig. 13 der Einfachheit halber mit 62 bezeichnet und als helle Schattierungen erkennbar. Diese Schattierungen verlaufen kreisringartig um die Mittellängsachse 43 herum, variieren allerdings in ihrer Kontur.

Ein Vergleich der beiden Teilbereiche 72 und 73 verdeutlicht, dass in den Teilbereichen völlig unterschiedliche geometrische Strukturen erkennbar sind, wobei insbesondere deutlich wird, dass im ersten Teilbereich 72 größere Flächenanteile an stirnseitigen Flächen erkennbar sind als in dem Teilbereich 73.

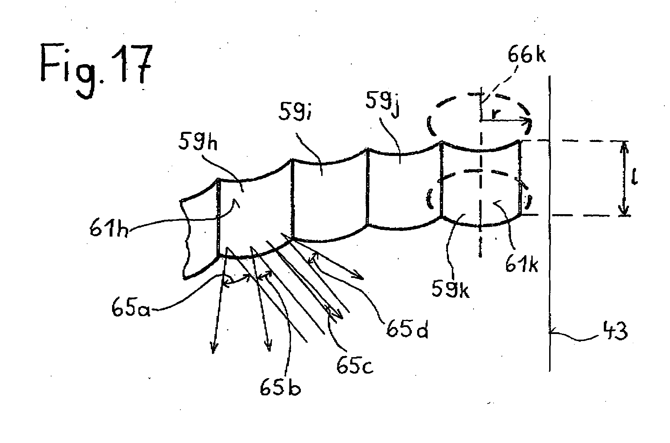

Fig. 16 verdeutlicht einen weiteren Aspekt einer vorteilhaften Ausgestaltung der erfindungsgemäßen Leuchte: Hier sind schematisch die zwischen dem Scheitelbereich 44 und dem freien Randbereich 45 angeordneten Segmente 59aa, 59ab, 59ac, 59ad, 59ae, 59af, 59ag, 59ah, 59ai, 59aj, 59ak, 59al, 59am dargestellt. Fig. 16 verdeutlicht, dass in einem jeweiligen Anwendungsbereich eines Segmentes an die Außenseite 74 des Reflektorelementes 41 eine Tangente anlegbar ist. Die Tangenten sind in Fig. 16 mit 68ab, 68af, 68ai und 68am bezeichnet. Die Tangente 68ab ist an die Außenseite 74 des Reflektorelementes 41 im Bereich der Anbindung des Segmentes 59ab angelegt. Das Segment 59ab ist als zylindrisches Segment ausgebildet. Fig. 17 verdeutlicht dabei beispielhaft anhand eines Segmentes 59k, dass jedes Segment von einem zylindrischen Grundkörper mit dem Grundradius r und der Höhe I gebildet ist. Die gekrümmte Zylinderfläche 61 k dieses Segmentes stellt die eigentliche Reflektionsfläche des jeweiligen Segmentes bereit. Die Zylinderachse ist in Fig. 17 für das Segment 59k mit 66k bezeichnet.

Die Zylinderachsen der Segmente 59ab, 59af, 59ai und 59am sind in Fig. 16 mit 66ab, 66af, 66ai und 66am bezeichnet. Zwischen der jeweiligen Zylinderachse und der jeweiligen Tangente ist ein Abweichungswinkel 67ab, 67af, 67ai und 67am angeordnet. Mit unterschiedlichem Abstand des jeweiligen Segmentes vom Scheitelbereich 44 kann dieser Abweichungswinkel variieren.

Damit besteht die Möglichkeit, ein derartiges Reflektionsverhalten zu erzeugen, wie es in Fig. 14 und Fig. 6 angedeutet ist. Der erste Teilbereich 72 des Reflektorelementes 41 dient also vornehmlich dazu, das Reflektionsverhalten eines im Querschnitt elliptischen Reflektors zu generieren, so dass sich die Lichtstrahlen in einem Brennpunkt B treffen. Die Lichtstrahlen sind in Fig. 6 mit 47a, 47b, 47c und 47d beispielhaft bezeichnet und treffen sich in einem Brennpunkt B, der etwa im Bereich einer Lichtaustrittsöffnung 38 der Leuchte liegt.

Die von der Lichtquelle 42 gemäß Fig. 6 ausgehenden Lichtstrahlen 48a, 48b, 48c treten aus der Leuchte 40 im Wesentlichen parallel aus. Im Falle einer deckenseitigen Anbringung der Leuchte 40, wie etwa gemäß Fig. 6 angedeutet, dienen die an dem ersten Bereich 72 reflektierten Lichtstrahlen vornehmlich dazu, einen leuchtennahen Bereich der auszuleuchtenden Gebäudefläche 15 auszuleuchten, während die an dem zweiten Teilbereich 73 reflektierten Lichtstrahlen vornehmlich dazu dienen, einen der Leuchte fernen Bereich der Gebäudefläche 15 auszuleuchten.

Angemerkt sei in diesem Zusammenhang, dass Direkt-Lichtanteile in Fig. 6 nicht dargestellt sind, sondern der Übersichtlichkeit halber weggelassen worden sind.

Weiter sei angemerkt, dass die Fig. 14 bis 17 lediglich beispielhaft zu verstehen sind und der Erläuterung dienen. Auch in dem jeweiligen Teilbereich 73 sind erfindungsgemäß vorzugsweise zahlreiche Segmente angeordnet, die, wie dies beispielsweise die Fig. 7 und 13 zeigen, von zylindrischen Körpern gebildet sind.

Fig. 13 verdeutlicht, dass die Segmente entlang von kreisringartig um die Längsmittelachse 43 herum laufenden Reihen angeordnet sind. So gehören die Segmente 63a, 63b und 63c der Fig. 13 zu einer gemeinsamen Reihe. Quer dazu verlaufen Spalten. Die Segmente 64a, 64b und 64c der Fig. 13 gehören einer gemeinsamen Spalte an.

Fig. 13 verdeutlicht des Weiteren, dass in dem Teilbereich 72 doppelt so viele Reihen angeordnet sind wie in dem Teilbereich 73. Des Weiteren verdeutlicht Fig. 13, dass in dem Teilbereich 72 die Segmente jeweils zweier benachbarter Reihen von Segmenten um etwa eine halbe Spaltenbreite umfangsversetzt angeordnet sind.

Fig. 13 lässt des Weiteren erkennen, dass die Grenzebene 51 im Wesentlichen senkrecht zu der größten Querschnittsfläche 52 steht. Fig. 6 zeigt demnach eine Ansicht des Reflektorelementes 41 entlang der größten Querschnittsfläche, also etwa in einer Blickrichtung der Schnittlänge VI-VI in Fig. 13.

Fig. 8 verdeutlicht das erfindungsgemäße Prinzip der Leuchte 40: Ohne eine Spreizlinsenplatte 23 ermöglicht die erfindungsgemäße Anordnung von Segmenten an der Innenseite des Reflektorelementes 41 die Erzielung einer Lichtverteilung einer beispielsweise im Wesentlichen ovalen Kontur, wie sie beispielsweise durch die Konturlinie 57 in Fig. 8 angedeutet ist. Zur Erzielung einer breiten, gleichmäßigen Lichtverteilung kann unter Zuhilfenahme der Spreizlinsenplatte 23 eine in Fig. 8 mit 58 gestrichelt dargestellte Kontur erzielt werden. Anzumerken ist dabei, dass es nicht auf die Erzielung einer bestimmten Kontur ankommt, sondern um eine in der Fläche besonders gleichmäßige Ausleuchtung der auszuleuchtenden Gebäudefläche.

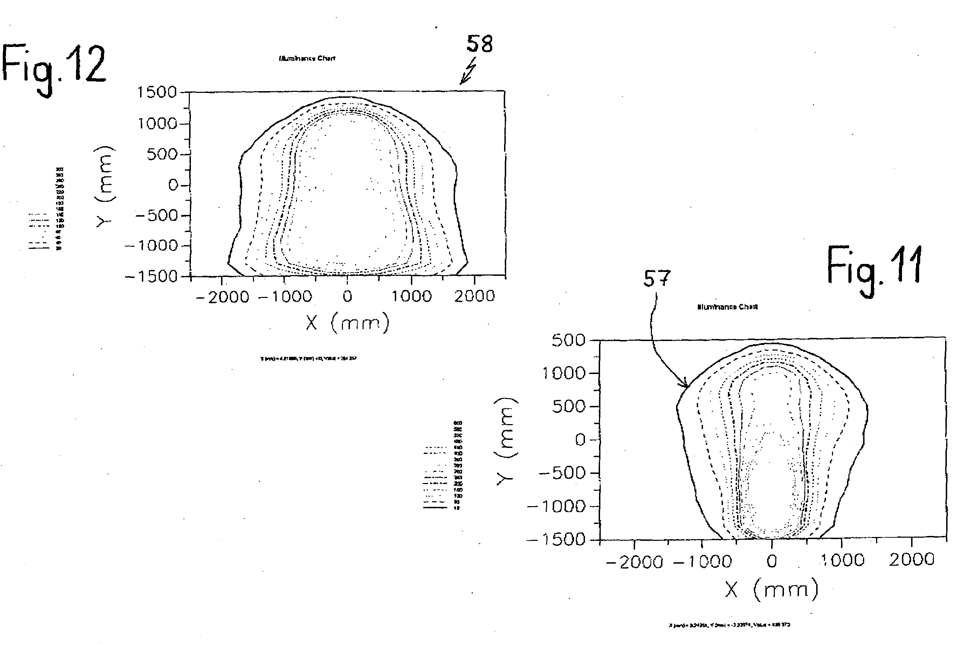

Besser geeignet als die Angaben von Konturen sind die Diagramme der Fig. 11 und 12, die die Beleuchtungsstärkeverteilungen in Linien gleicher Beleuchtungsstärken darstellen. Fig. 11 zeigt entsprechend eine Kontur 57 gemäß Fig. 8 die Beleuchtungsstärkeverteilung auf einer Wand 15, die mit einer Leuchte 40 erzeugt wird, bei der die Spreizlinsenplatte 23 weggelassen wurde. Fig. 12 zeigt die Beleuchtungsstärkeverteilung auf der gleichen Wand unter Zuhilfenahme der Spreizlinsenplatte 23. Man erkennt in Fig. 12 eine deutliche Verbreiterung der Beleuchtungsstärkeverteilung und eine höhere Gleichmäßigkeit bezogen auf die Beleuchtungsstärkeverteilung der Fig. 6 ohne Spreizlinsenplatte.

Angemerkt sei, dass die Fig. 9 und 10 eine Spreizlinsenplatte 23 zeigen, wobei grundsätzlich eine Spreizlinsenplatte 23 verwendet werden kann, wie sie zuvor bei dem Ausführungsbeispiel der Fig. 1 bis 5 beschrieben wurde. Von wesentlicher Bedeutung ist, dass die Spreizlinsenplatte Linsen bereitstellt, die für eine Aufspreizung der Lichtanteile zur Vergleichmäßigung der Ausleuchtung der Gebäudewand sorgen. Vorzugsweise sind zylindrische Linsen auf wenigstens einer der beiden Flächen der Spreizlinsenplatte 23 angeordnet. Fig. 10 verdeutlicht derartige zylindrische Linsen auf der Innenseite, wobei angemerkt sei, dass die Linsen auch auf der Außenseite oder alternativ auch auf beiden Seiten angeordnet sein können.

Die axiale Ausrichtung der zylindrischen Linsen 34a, 34b und 34c erfolgt erart, dass diese parallel zur Schnittlinie VI-VI in Fig. 13 orientiert sind. Damit wird eine Aufspreizung des Lichtes entlang der in Fig. 13 mit 51 bezeichneten Linie erzielt.

Fig. 8 verdeutlicht, dass die vertikal auszuleuchtende Gebäudewand 15 mit den Strahlen 54, 55 und 56, die entsprechende Lichtanteile symbolisieren sollen, entlang der gewünschten vertikalen Höhe ausgeleuchtet werden kann. In Übereinstimmung mit einer Darstellung der Fig. 4 und 5 können mit der erfindungsgemäßen Leuchte 40 aber auch beliebige Bereiche der auszuleuchtenden Gebäudefläche 15 ausgeleuchtet werden.

Angemerkt sei, dass die erfindungsgemäße Leuchte 40 vorzugsweise ein Reflektorelement 41 aufweist, welches auf seiner Innenseite gänzlich mit Segmenten, vorzugsweise gänzlich mit zylindrischen Segmenten, besetzt ist. Von der erfindungsgemäßen Lehre sind aber auch solche Leuchten erfasst, deren Reflektorelement 41 auf seiner Innenseite 69 nur entlang eines Umfangswinkelbereiches um die Längsmittelachse 43 herum mit zylindrischen Segmenten ausgestattet ist, wobei die übrigen Bereiche der Innenumfangsseite des Reflektorelementes 41 mit anders ausgebildeten Segmenten ausgestattet sein können oder glatt belassen sein können.

Schließlich ist von der erfindungsgemäßen Leuchte auch ein Reflektorelement umfasst, welches auf seiner Innenseite mit sphärisch oder asphärisch gewölbten Segmenten ausgestattet ist. Erfindungswesentlich ist bei dem Gegenstand des Anspruches 20 eine Kombination einer Spreizlinsenplatte mit einem segmentartig unterteilten Facettenreflektor, wobei durch eine individuelle Ausgestaltung der Reflektionsoberfläche mit den zahlreichen Segmenten eine Abstrahlcharakteristik entlang einer ersten Richtung und durch Verwendung einer Spreizlinsenplatte eine entsprechende Aufspreizung in einer anderen Richtung erzielt wird.

Hinsichtlich einer Herstellung einer Leuchte gemäß Fig. 6 sei angemerkt, dass das Reflektorelement 41 vorzugsweise aus gedrücktem Aluminium besteht. Hierzu kann aus einer Aluminiumronde durch Drücken gegen eine rotierende Patrize ein schalenförmiges, hinsichtlich seiner Grundform im Wesentlichen rotationssymmetrisches Reflektorelement hergestellt werden. Das nicht dargestellte Patrizenwerkzeug ist auf seiner Außenseite mit entsprechenden Konturen versehen, wobei sich diese Außenkonturen in die Innenseite des Reflektorelementes 41 hineinprägen oder hineindrücken können. Eine Entformung des Werkzeuges aus dem Reflektorelement ist in Axialrichtung möglich. Bei der Anordnung von Hinterschneidungen, wie in Fig. 15 angedeutet, kann vorzugsweise auch ein, in der zuvor beschriebenen nachveröffentlichten Patentanmeldung der Anmelderin beschriebenes mehrteiliges Werkzeug zum Zuge kommen.

Nach der Entformung des Reflektorelementes kann dieses entlang der Schnittebene 53 abgetrennt werden. Ausgehend von Fig. 14 erfolgt eine Trennung beispielsweise durch Sägen oder Schneiden derart, dass entlang der Ebene 53 ein Schneidewerkzeug relativ zu dem feststehenden Reflektorelement 41 verlagert wird. Der zwischen dem ursprünglichen freien Rand 46a und dem nach Abtrennen des Trennstückes 75 neue, maßgebliche Randbereich 46 befindliche Bereich, also das Trennstück 75, wird entfernt und bildet Ausschuss.

Das überbleibende Reflektorelement 41 mit seiner nunmehr entstandenen ovalen Lichtaustrittsöffnung 24 kann in die Leuchte 40 eingebaut werden und ermöglicht eine besonders kompakte Bauform. Insbesondere vorteilhaft ist die Längsmittelachse 43 des Reflektorelementes 41 im Einbauzustand der Leuchte 40 geneigt zu der Decke 14 angeordnet.

Fig. 6 zeigt des Weiteren einen Darklight-Reflektorabschnitt 26, der eine Abschirmung etwa unter einem Abschirmungswinkel von 40° ermöglicht.

Hinsichtlich des Prinzips der Darklight-Reflektortechnik kann auf ältere Druckschriften des Standes der Technik der Anmelderin und auf das Wissen des Fachmannes verwiesen werden. Der Darklight-Reflektorabschnitt 26 ermöglicht, dass ein in dem Raumwinkelbereich P des Winkelgrades α befindlicher Betrachter von Lichtstrahlen, die an dem Reflektorabschnitt 26 reflektierten werden, nicht geblendet wird.

Zum weiter verbesserten Verständnis des geometrischen Aufbaus des Reflektors sei angemerkt, dass sich die Grenzebene 51 zwischen den Teilbereichen 72 und 73 bei Betrachtung der Fig. 6 entlang der Längsmittelachse 43 des Reflektorelementes 41 erstreckt. Die Schnittebene 53 schneidet die Grenzebene 51 entlang einer mit 76 bezeichneten Geraden. Diese Gerade verläuft senkrecht zur Papierebene der Fig. 6, und damit senkrecht zur Längsmittelachse 43 des Reflektorelementes.

Bei beiden Ausführungsbeispielen der Fig. 2 und 6 ist die Spreizlinsenplatte 23 in montiertem Zustand der Leuchte unter einen spitzen Winkel zur auszuleuchtenden Wand geneigt, vorzugsweise unter einem Winkel von etwa 50°. Weiter vorzugsweise kann die Spreizlinsenplatte 23 gegenüber der auszuleuchtenden Wand, aber auch unter einem Winkel zwischen 20° und 70° geneigt sein.

## Patentansprüche

1. Leuchte (10) zur Ausleuchtung einer Gebäudefläche (15), umfassend einen, eine Lichtaustrittsöffnung (24) aufweisenden, schalenförmigen Grundkörper (11), in dessen Innenraum (31) eine Lichtquelle (12) angeordnet ist, wobei indirekte Lichtanteile (30a, 30b, 30c) ausgehend von der Lichtquelle erst nach Reflektion an Reflektorflächen (21, 22) und Direktlichtanteile (29a, 29b, 29c) ausgehend von der Lichtquelle ohne Reflektion an Reflektorflächen durch die Lichtaustrittsöffnung hindurchtreten können, wobei im Bereich der Lichtaustrittsöffnung eine Spreizlinsenplatte (23) angeordnet ist, die für eine Aufspreizung der Lichtanteile zur Vergleichmäßigung der Ausleuchtung der Gebäudefläche sorgt, und wobei die Reflektorflächen einen im Querschnitt parabelförmigen Wandabschnitt (22) und einen im Querschnitt elliptischen Wandabschnitt (21) aufweisen.

2. Leuchte nach Anspruch 1, **dadurch gekennzeichnet, dass** der Grundkörper (11) wannenförmig ausgebildet ist.

3. Leuchte nach Anspruch 2, **dadurch gekennzeichnet, dass** die Lichtquelle (12) axial lang gestreckt ausgebildet ist.

4. Leuchte nach Anspruch 2 oder 3, **dadurch gekennzeichnet, dass** die Spreizlinsenplatte (23) für eine Aufspreizung des Lichts in Axialrichtung (x) sorgt.

5. Leuchte nach einem der Ansprüche 2 bis 4, **dadurch gekennzeichnet, dass** der Grundkörper (11) und/oder die Wandabschnitte (21, 22) zylindrisch ausgebildet sind.

6. Leuchte nach einem der Ansprüche 2 bis 5, **dadurch gekennzeichnet, dass** die Spreizlinsenplatte (23) eine Vielzahl von quer zur Axialerstreckung (x) verlaufenden Rippen zur Bildung von ZylinderLinsen (34a, 34b, 34c) aufweist.

7. Leuchte nach einem der vorangegangenen Ansprüche, **dadurch gekennzeichnet, dass** die Leuchte (10) als Bodeneinbauleuchte ausgebildet ist.

8. Leuchte nach einem der vorangegangenen Ansprüche, **dadurch gekennzeichnet, dass** der parabelförmige Wandabschnitt (22) derart relativ zur Lichtquelle (12) angeordnet ist, dass die daran reflektierten Lichtanteile (30b) überwiegend einen der Leuchte fernen Bereich (z. B. 20 in Fig. 1) der Gebäudefläche ausleuchten, und/oder dass der elliptische Wandabschnitt (21) derart relativ zur Lichtquelle (12) angeordnet ist, dass die daran reflektierten Lichtanteile überwiegend einen der Leuchte nahen Bereich der Gebäudefläche (15) ausleuchten.

9. Leuchte nach einem der vorangegangenen Ansprüche, **dadurch gekennzeichnet, dass** die Leuchte in Lichtabstrahlrichtung hinter der Spreizlinsenplatte (23) einen Darklight-Reflektor-Abschnitt (26) aufweist.

10. Leuchte (40) zur Ausleuchtung von Gebäudeflächen (15), umfassend ein im wesentlichen schalenartig ausgebildetes, sich entlang einer Längsmittelachse (43) von einem Scheitelbereich (44) zu einer Lichtaustrittsöffnung (24) hin erweiterndes Reflektorelement (41), in dessen Innenraum wenigstens eine Lampe (42) anordenbar ist, wobei indirekte Lichtanteile (47a, 47b, 48a, 48b) ausgehend von der Lichtquelle erst nach Reflektion an der Innenseite (69) des Reflektorelementes und Direktlichtanteile ausgehend von der Lichtquelle ohne Reflektion an der Innenseite (69) des Reflektorelementes durch die Lichtaustrittsöffnung hindurchtreten können, wobei im Bereich der Lichtaustrittsöffnung eine Spreizlinsenplatte (23) angeordnet ist, die für eine Aufspreizung der Lichtanteile zur Vergleichmäßigung der Ausleuchtung der Gebäudefläche sorgt, und wobei an der Innenseite (69) des Reflektorelementes (41) eine Vielzahl von Segmenten (59a, 59b, 59c) mit einer zum Innenraum hin gewölbten Oberfläche (61c) angeordnet ist.

11. Leuchte nach Anspruch 10, **dadurch gekennzeichnet, dass** das Reflektorelement (41) aus Metall besteht.

12. Leuchte nach Anspruch 11, **dadurch gekennzeichnet, dass** das Reflektorelement (41) aus gedrücktem Aluminium besteht.

13. Leuchte nach einem der Ansprüche 10 bis 12, **dadurch gekennzeichnet, dass** das Reflektorelement (41) einen hinsichtlich seiner Grundform um seine Längsmittelachse (43) rotationssymmetrisch ausgebildeten Basiskörper umfasst, der im Bereich seiner Lichtaustrittsöffnung entlang einer Ebene (53) geneigt zur Längsmittelachse (43) abgeschnitten oder getrennt ist oder der einen die Lichtaustrittsöffnung (24) umgebenden Rand (45, 46) aufweist, der entlang einer Ebene (53) verläuft, die geneigt zur Längsmittelachse (43) des Reflektorelementes (41) ausgerichtet ist.

14. Leuchte nach Anspruch 13, **dadurch gekennzeichnet, dass** die Spreizlinsenplatte (23) entlang der Ebene (53) oder der Schnittebene (53) relativ zu dem Reflektorelement (41) angeordnet ist.

15. Leuchte nach einem der Ansprüche 10 bis 14, **dadurch gekennzeichnet, dass** zumindest einige Segmente (59a, 59b, 59c, 59k) jeweils von einem Abschnitt eines Zylinders (Fig. 17), insbesondere eines kreiszylindrischen Körpers, gebildet sind.

16. Leuchte nach einem der Ansprüche 10 bis 15, **dadurch gekennzeichnet, dass** sämtliche Segmente (59a, 59b, 59k) jeweils von einem Abschnitt eines Zylinders, insbesondere eines kreiszylindrischen Körpers, gebildet sind.

17. Leuchte nach einem der Ansprüche 15 bis 16, **dadurch gekennzeichnet, dass** die Neigung der Mittelachsen (66ab, 66ac, 66ai, 66am) der Zylinder (59ab, 59af, 59ai, 59am), insbesondere deren Neigung relativ zu einer an die Außenseite (74) des Reflektorelementes (41) anlegbaren Tangente (68ab, 68ai), mit dem Abstand des Zylinders von dem Scheitel (44) des Reflektors variiert.

18. Leuchte nach Anspruch 17, **dadurch gekennzeichnet, dass** die Variation der Neigung der Zylinderachsen (66ab, 66af, 66ai, 66am) zumindest einiger Segmente eines Umfangswinkelbereiches derart getroffen ist, dass sich die von der Lichtquelle (42) ausgehenden Lichtstrahlen, die auf diese zylindrischen Segmente treffen, in einem Brennpunkt (B) kreuzen.

19. Leuchte nach Anspruch 18, **dadurch gekennzeichnet, dass** der Brennpunkt (B) außerhalb der Lichtaustrittsöffnung (24) des Reflektorelementes (41) liegt.

20. Leuchte nach Anspruch 19, **dadurch gekennzeichnet, dass** der Brennpunkt (B) nahe der oder in der Lichtaustrittsöffnung (38) der Leuchte (40) liegt.

21. Leuchte nach einem der vorangegangenen Ansprüche, **dadurch gekennzeichnet, dass** die Innenseite (69) des Reflektorelementes (41) entlang des gesamten Umfangs mit Segmenten (59) besetzt.

22. Leuchte nach Anspruch 21, **dadurch gekennzeichnet, dass** die Innenfläche (69) des Reflektorelementes (41) in wenigstens zwei Teilbereiche (72, 73) unterteilt ist.

23. Leuchte nach Anspruch 22, **dadurch gekennzeichnet, dass** in den unterschiedlichen Teilbereichen (72, 73) unterschiedlich gewölbte und/oder unterschiedlich große Segmente angeordnet sind oder eine unterschiedliche Flächendichte von Segmenten besteht.

24. Leuchte nach Anspruch 22 oder 23, **dadurch gekennzeichnet, dass** in dem zweiten Teilbereich (73) Segmente angeordnet sind, die überwiegend oder zumindest teilweise ein Reflektionsverhalten eines im Querschnitt parabelförmigen Reflektors nachahmen.

25. Leuchte nach Anspruch 24, **dadurch gekennzeichnet, dass** in dem ersten Teilbereich (72) Segmente angeordnet sind, die überwiegend oder zumindest teilweise ein Reflektionsverhalten eines im Querschnitt ellipsenförmigen Reflektors nachahmen.

26. Leuchte nach einem der vorangegangenen Ansprüche, **dadurch gekennzeichnet, dass** bei Betrachtung einer größten Querschnittsfläche (52) des Reflektorelementes (41) eine Vielzahl von Segmenten erster Art auf der ersten Seite der Längsmittelachse (43) des Reflektorelementes und eine Vielzahl von Segmenten zweiter Art auf der anderen Seite der Längsmittelachse angeordnet sind.

27. Leuchte nach einem der vorangegangenen Ansprüche, **dadurch gekennzeichnet, dass** bei Betrachtung einer Querschnittsfläche (51), die senkrecht zu der größten Querschnittsfläche (52) steht, eine symmetrische Ausbildung des Reflektorelementes (41) bezogen auf die Längsmittelachse (43) ersichtlich ist.

28. Leuchte nach Anspruch 26, **dadurch gekennzeichnet, dass** die Segmente erster Art (Teilbereich 72) überwiegend ein Reflektionsverhalten eines im Querschnitt ellipsenförmigen Reflektors nachahmen.

29. Leuchte nach einem der vorangegangenen Ansprüche, **dadurch gekennzeichnet, dass** die Segmente zweiter Art (Teilbereich 73) überwiegend ein Reflektionsverhalten eines im Querschnitt parabelförmigen Reflektors nachahmen.

30. Verfahren zur Herstellung eines Reflektorelementes (41) aus einem Ausgangsmaterial-Werkstück, insbesondere aus Aluminium, mit einer Vielzahl von Segmenten (59a, 59b, 49c) auf der Innenseite (69), **gekennzeichnet durch** die Schritte:
a) Bereitstellen eines Ausgangsmaterial-Werkstücks, insbesondere einer Aluminium-Ronde,
b) Ausüben einer Relativ-Kraft zwischen dem Werkstück und einem Patrizen-Werkzeug, wobei das Patrizenwerkzeug eine Außenkontur aufweist, die sich auf der Innenkontur des Werkstücks abdrückt,
c) Durchführen einer Axial-Bewegung des Patrizen-Werkzeuges relativ zu dem Werkstücks zur Bewerkstelligung einer Entformung des Patrizen-Werkzeugs aus dem Reflektorelement,
d) Abtrennen eines Abschnittes (75) des Reflektorelementes (41) entlang einer Trennebene (53), die zu einer Längsmittelachse (43) des Reflektorelementes (49) geneigt ist.

31. Leuchte (40) zur Ausleuchtung von Gebäudeflächen (15), insbesondere nach einem der Ansprüche 10 bis 29, umfassend ein erstes im Wesentliches schalenartig ausgebildetes, sich entlang einer Längsmittelachse (43) von einem Scheitelbereich (44) zu einer Lichtaustrittsöffnung (24) hin erweiterndes Reflektorelement (41), in dessen Innenraum wenigstens eine Lampe (42) anordenbar ist, wobei im Bereich der Lichtaustrittsöffnung eine Spreizlinsenplatte (23) angordenbar ist, die für eine Aufspreizung der Lichtanteile zur Vergleichmäßigung der Ausleuchtung der Gebäudefläche sorgt, wobei das erste Reflektorelement mit einer Vielzahl von an der Innenseite (69) angeordneten Segmenten (59a, 59b, 59c) mit einer zum Innenraum hin gewölbten Oberfläche vorgesehen ist, wobei das Reflektorelement einen hinsichtlich seiner Grundform um seine Längsmittelachse rotationssymmetrischen Basiskörper umfasst, der im Bereich seiner Lichtaustrittsöffnung entlang einer Ebene (53) geneigt zur Längsmittelachse (43) abgeschnitten oder getrennt ist, oder der einen die Lichtaustrittsöffnung umgebenden Rand (45, 46) aufweist, der entlang einer Ebene (53) verläuft, die geneigt zur Längsmittelachse des Reflektorelementes ausgerichtet ist, wobei das erste Reflektorelement durch ein zweites Reflektorelement gleicher äußerer Dimensionen austauschbar ist, und wobei das zweite Reflektorelement an seiner Innenseite eine Vielzahl von Segmenten mit einer zum Innenraum hin gewölbten Oberfläche aufweist, wobei die Art der Segmente und/oder die Anordnung der Segmente und/oder die Wölbung der Segmente zur Erzielung einer zu dem ersten Reflektorelement unterschiedlichen Lichtabstrahlcharakteristik unterschiedlich getroffen ist.
